Europäisches Patentamt

European Patent Office

Office européen des brevets

(19)

(11) **EP 1 105 706 B1**

(12) **EUROPÄISCHE PATENTSCHRIFT**

(45) Veröffentlichungstag und Bekanntmachung des Hinweises auf die Patenterteilung:
**01.09.2004 Patentblatt 2004/36**

(21) Anmeldenummer: **98955545.3**

(22) Anmeldetag: **06.11.1998**

(51) Int Cl.⁷: $G01M\ 1/30$, $G01M\ 1/38$

(86) Internationale Anmeldenummer:
**PCT/EP1998/007088**

(87) Internationale Veröffentlichungsnummer:
**WO 2000/011445 (02.03.2000 Gazette 2000/09)**

(54) **VERFAHREN ZUR VERBESSERUNG DES REIFENRUNDLAUFES UND REIFEN, DER DIE DURCHFÜHRUNG DIESES VERFAHRENS ERLEICHTERT**

METHOD FOR IMPROVING CONCENTRICITY IN AUTOMOBILE TIRES

PROCEDE POUR AMELIORER LA CONCENTRICITE D'UN PNEUMATIQUE DE VEHICULE

(84) Benannte Vertragsstaaten:
**AT BE CH CY DE DK ES FI FR GB GR IE IT LI LU MC NL PT SE**

(30) Priorität: **19.08.1998 DE 19837680**

(43) Veröffentlichungstag der Anmeldung:
**13.06.2001 Patentblatt 2001/24**

(73) Patentinhaber: **Continental Aktiengesellschaft 30001 Hannover (DE)**

(72) Erfinder:
• **HOMT, Günter**
  **D-30823 Garbsen (DE)**
• **GLINZ, Michael**
  **D-37535 Neustadt (DE)**
• **SERGEL, Horst**
  **D-30657 Hannover (DE)**

(56) Entgegenhaltungen:
| | |
|---|---|
| EP-A- 0 492 784 | DE-A- 2 453 370 |
| DE-A- 2 455 279 | DE-A- 4 309 513 |
| DE-A- 4 326 370 | DE-A- 4 339 775 |
| DE-A- 19 643 762 | DE-C- 458 554 |

## Beschreibung

Die Erfindung bezieht sich auf ein Verfahren zur Verbesserung des Rundlaufes eines Fahrzeugluftreifens, wobei dessen Wulst einer den Rundlauf verbessernden Nachbehandlung nach der Vulkanisation unterworfen wird.

Die **deutsche Patentschrift 458 554** offenbart ein Verfahren zur Auswuchtung rohrartig hohler Wellen aus Metall, bei dem an den Stellen, wo eine Ungleichmäßigkeit der Massenverteilung eine zu große Fliehkraft entstehen lässt, kleine Einbeulungen der Wellenwandung nach radial innen, also Dellen, erzeugt werden.

Das **deutsche Gebrauchsmuster G 72 28 584.8** beschreibt 1972 eine Vorrichtung zur Überprüfung der Wulstkennung von Kraftfahrzeugreifen. Dabei wird der Reifenwulst auf eine offenbar in Segmente geteilte Trommel gebracht und die Segmente radial auseinander gefahren. Die dabei auf die Segmente ausgeübten Reaktionskräfte werden gemessen.

Die **DE-OS 196 43 762 A1** veröffentlicht 1998 eine Weiterbildung vorgenannter Vorrichtung, bei der die Konizität der radial auseinander fahrbaren Segmente an die Konizität der Felgensitzfläche der Reifenwülste angepasst ist zwecks Vergleichmäßigung der Pressung. Dabei wird erstmalig davon berichtet, dass Wulstgummi unter extremer Pressung plastisch zu fließen vermag. Durch Verringerung der maximalen Pressung soll diese Fehlerquelle gestopft werden.

Die **DE-PS 24 55 279 C2** lehrt ein Verfahren zur Auswuchtung eines luftbereiften Rades mittels plastischer Verformung der Felge.

Aus der **DE-OS 27 15 111** ist es bekannt, zur Verminderung der Reifenunwucht den fertig vulkanisierten Reifen einer solchen Nachbehandlung zu unterziehen, dass auf den axial inneren Seiten des Reifenwulstes zusätzliches Gummi angebracht oder entfernt wird.

Aus der **EP 0 405 297 A1** ist es bekannt, durch eine lösbar befestigte Ringscheibe angepasster Dicke über dem Umfang in ähnlicher Weise wie bei vorgenannter Entgegenhaltung den Wulst örtlich so zu verschieben, dass er im Laufflächenbereich bei gegebener Reifeneinfederung eine gleichmäßigere Radialkraft erzeugt.

Die **DE-OS 43 09 513 A1** offenbart verschiedene Verfahren zur Rundlaufverbesserung eines luftbereiften Rades, darunter eines mittels plastischer Verformung der Felge.

Aus der **DE 43 39 775 A1** ist es bekannt, an den Stellen, also Phasenlagen, wo der Reifen der Reifen eine zu große Radialkraft erzeugt oder einen zu großen Laufflächenradius aufweist etwas Gummi von der nach radial innen weisenden Wulstfläche abzutragen, vorzugsweise abzuschleifen. Dieser Stand der Technik scheint uns der nächstliegende zu sein.

Mit der Korrektur von Reifenungleichmäßigkeiten befassen sich ferner die **US-PS 3,550,442;** **3,719,813; 3,862,570; 4,016,020** und **4,414,843** sowie die **japanische Anmeldung 61-195 809**.

Die nachträgliche Gummianbringung, wie sie aus der bereits genannten DE-OS 27 15 111 bekannt ist, bereitet in der Praxis Schwierigkeiten, weil in der Regel die Reifenrohlinge vor dem vulkanisieren mit einem Trennmittel beschichtet werden. An den Stellen, wo man nachträglich Gummi auftragen und festhaftend anvulkanisieren will, muss dieses Trennmittel zuverlässig entfernt und die Fügefläche aufgeraut werden; beides ist um ein vielfaches aufwendiger, als Gummi - von wo auch immer - zu entfernen.

Ein Nachteil des Verfahrens nach der **DE 43 39 775 A1** ist der, dass diese Art der Fehlerkompensation praktisch irreversibel ist, weil - wie vorstehend erläutert - die nachträgliche Gummi(wieder)anbringung sehr aufwendig ist; daraus folgt, dass in der Regel bereits die erste Korrektur auch die letztmögliche ist. Es muss also vor dem irreversiblen Abtrag eine sehr hohe Sicherheit darüber vorliegen, wieviel an welcher Stelle abzutragen ist. Nach den bisherigen Erfahrungen werden hiermit dann und nur dann gute Ergebnisse erzielt, wenn jeder behandelte Reifen zuvor individuell vermessen wurde und zwar auch dann, wenn die Reifen einer Herstellungscharge neben den zufälligen Fehlern einen geneinsamen systematischen Fehler aufweisen.

Ein weiterer Nachteil des vorgenannten Verfahrens ist der, dass der Gummiabtrag zu einer Verschmutzung des Arbeitsplatzes führt.

Die bereits zitierte **EP 0 405 297** vermeidet zwar diese beiden Nachteile, ist aber für alle reifenmontierenden Unternehmen, also den Automobilherstellern und den Reifenfachhändlern, insofern unangenehm, als zwei zusätzliche Bauteile pro Rad zu handhaben sind.

Aufgabe der Erfindung ist es, alle drei genannten Nachteile der vorbekannten Lösungen auf einfache Weise zu vermeiden.

Die Erfinder erkannten zunächst, dass an dem Wulst als Eingriffsort festgehalten werden sollte, weil nur so, also durch Vermeidung der Lauffläche als Eingriffsort, die Leistungsfähigkeit und die Lebensdauer des Reifens von dem korrigierenden Eingriff unbeeinflusst bleiben. Sie erkannten ferner, dass die Aufgabe, die sie sich gestellt haben, innerhalb der üblichen Denkmodelle unlösbar war; denn wenn kein zusätzliches Bauteil vorhanden sein soll, ein Abtrag wegen Irreversibilität vermieden werden soll und ein Auftrag entschieden zu teuer ist, dann scheint zunächst nichts mehr möglich zu sein.

In dieses aussichtslos erscheinende Feld konkurrierender Ziele platzten die Erfinder mit ihrer Idee, die Aufgabe dadurch zu lösen, dass während der Nachbehandlung der Wulst zumindest bereichsweise plastisch umgeformt wird. Dabei soll die kurz zuvor bekannt gewordene, bislang als Fehlerquelle bekämpfte plastische Verformbarkeit von Gummi unter extremen Drükken nutzbar gemacht werden. Die Erfinder haben erkannt, dass viele Gummimischungen quasi thermoplastisch verformt werden können bei ausreichend hohem Druck, ausreichend hoher Temperatur und ausreichend langer Einwirkungszeit. Dies widerspricht der üblichen Einordnung vulkanisierter Gummimischungen als Elastomere, siehe zum Beispiel DIN 7724, wo steht: "Elastomere - im Sprachgebrauch auch Vulkanisate oder Gummi - haben ... eine Glasübergangstemperatur $T_g$ von kleiner 0°C und oberhalb des Gebrauchstemperaturbereiches bis zu ihrer Zersetzung keinen Fließbereich." In dem Bericht über die Fachtagung "Elastomerbahnen im Flachdachbau" vom 24.03.1981 in Frankfurt/ Main, gedruckt in der Zeitschrift "Kautschuk + Gummi - Kunststoffe, 34. Jahrgang, Nr. 11/81, Seiten 927 bis 937, steht auf Seite 931, rechte Spalte, ab Zeile 4: "... Elastomere sind gummielastische Polymerwerkstoffe, die nicht mehr thermoplastisch formbar sind, also keinen Fließbereich aufweisen. Dies nun wird durch den Vulkanisationsprozess erreicht, bei dem die Makromoleküle über chemische Brückenbindungen so miteinander vernetzt sind, dass sie nicht mehr gegeneinander abgleiten, d. h. nicht fließen können."

Das gemäß vorliegender Erfindung erzeugte quasithermoplastische Fließen läuft deutlich langsamer ab als bei bekannten Thermoplasten und bekannten thermoplastischen Elastomeren. Bei dem quasi-thermoplastischen Fließen scheint es sich nicht um ein rein physikalisches Aneinandervorbeigleiten von Kettenmolekülen zu handeln sondern um einen Abbau hochbelasteter Schwefelbrücken und einen Wiederaufbau weniger gespannter Schwefelbrücken also einen Schwefelbrückenumbau:

Ist die höchstgespannte und damit energiereichste Schwefelbrücke durch eine spannungsärmere ersetzt, so werden alle anderen Schwefelbrücken um einen geringfügigen Betrag höher gespannt. Die ehemals zweitgespannteste Schwefelbrücke gibt nach dieser Mehrbelastung auch auf und substituiert sich unter Energieabgabe durch eine spannungsärmere Schwefelbrücke und so fort. Das sich abzeichnende - aber noch nicht mit letzter Sicherheit bewiesene - Springen der Schwefelbrückenanbindung von einem Ankeratom des Polymer- und/oder Füllstoffatomes zu einem anderen Ankeratom wäre also letztlich ein mechanisch induzierter chemischer Prozess.

Der Ablauf und das Ergebnis dieses chemischen Prozesses wird außer von der mechanischen Spannung auch von der Prozesstemperatur und der dem Prozess zur Verfügung gestellten Zeit beeinflusst. Eine Erhöhung der Prozesstemperatur und/oder der Prozesszeit erlaubt die Erreichung der selben bleibenden Maßänderung durch Umformung mit einer geringeren mechanischen Spannung; die Abnahme der erforderlichen mechanischen Spannung über einer Temperaturerhöhung und/oder Zeiterhöhung ist aber allenfalls über einem sehr kleinen Temperaturbereich als lineare Funktion darstellbar.

Auch wenn mit verringerter mechanischer Spannung und entsprechend erhöhter Temperatur und/ oder Prozessdauer die selbe bleibende Maßänderung erzielt wird, so stimmt dennoch das Ergebnis nicht überein, weil auch die Härte des Endproduktes wesentlich ist; eine Erhöhung der Prozesstemperatur und/oder der Prozessdauer führt neben der bereits erwähnten - und begrüßten - Verlagerung der Schwefelbrücken von ehemaligen zu neu gefundenen Ankeratomen auch zu einer häufigeren Fraktur der nicht nur an ihren Ankeratomen sondern auch in sich weniger stabil gewordenen Schwefelbrücken, sodass nach der Behandlung mehr und kürzere Schwefelbrücken vorliegen, was eine größere Härte des Endproduktes bewirkt.

Also ist - zwecks Aufrechterhaltung genügender Weichheit des behandelten Wulstes - eine allzu hohe Prozesstemperatur genauso zu vermeiden wie eine allzu hohe Prozesszeit. Letztere ist zudem aus dem wirtschaftlichen Grunde zu vermeiden, dass die Verzinsung des eingesetzten Kapitales nicht durch zu lange Fertigungszeiten zu sehr geschmälert werden darf. Eine günstige Abstimmung der Parameter Spannung, Temperatur und Zeit ist Gegenstand der Ansprüche 5 und 8.

Es hat sich für die Durchführung des Verfahrens als zweckmäßig erwiesen, wenn die Gummimischung mindestens 10-mal soviel Schwefel enthält wie angesichts der gewählten Vulkanisationsdaten wie Vulkanisationszeit, Vulkanisationstemperatur, Beschleuniger-auswahl und -dosierung sowie Verzögererauswahl und -dosierung im Vulkanisat tatsächlich für den Schwefelbrückenaufbau ausgenutzt ist; dies scheint damit zu erklären zu sein, dass ohne ausreichenden Überschuss von Schwefel in der Mischung der Ersatz der höchstgespannten Brücke durch eine ähnlich lange, aber weniger gespannte Schwefelbrücke zu unwahrscheinlich wird, weil die Migrationswege einiger der dafür erforderlichen Schwefelatome zu lang werden; bei zu geringem Schwefelüberangebot entstehen als Ersatz einer überspannten langen Schwefelbrücke eher zwei kürzere Schwefelbrücken, die aus weniger großen Einzugsgebieten Schwefelatome rekrutieren und deshalb nur kürzere Migrationswege erfordern. Ein unzureichender Schwefelüberschuss wirkt also ähnlich wie eine zu hohe Prozesstemperatur, also zu sehr verhärtend. Ein besonders gutes quasi-thermoplastisches Verhalten unter hoher Druckeinwirkung erreichen Wulstgummimischungen, wenn sie das 30- bis 90-fache der Menge an Schwefel enthalten, die im Vulkanisat wirklich Schwefelbrücken gebildet haben.

Beim Benutzen der - meistens in unmittelbarer Nähe zur Felge angeordneten - Bremse eines Rades wird die Felge erheblich aufgeheizt, was zu einer Durchmesservergrößerung der Sitzfläche führt und damit zu einer Kompressionserhöhung. Um die für eine Sicherung des Reifens gegen sein Verdrehen auf der Felge bei Längskraftübertragung und gegen sein Abwerfen bei niedrigem Luftdruck erforderliche Mindestkompression auch nach der Wiederabkühlung der Felge aufrecht zu erhalten, muss sich das Wulstgummi nach Wiederabkühlung der Felge wieder genügend nach radial innen hin elastisch ausdehnen.

Um diese Sicherheit zu erreichen, darf im Wulstbereich nur eine solche Gummimischung verwendet werden, deren Verformungsrest extrem klein ist; darum waren und sind Wulstmischungen darauf "gezüchtet", hochelastisch zu sein. Von daher erschien das Funktionieren der vorgeschlagenen Lösung, wo ja eine bleibende Verformung erzeugt werden soll, unwahrscheinlich.

Das Problem der temperaturbedingten Durchmesseränderungen stellt sich bei Mitberücksichtigung der Schwankungen der Außentemperatur noch schärfer dar, wenn für die Felgen ein Werkstoff mit anderem Ausdehnungskoeffizienten im Verhältnis zum E-Modul verwendet ist als für die Festigkeitsträger des Wulstkernes, also insbesondere bei Verwendung von Felgen aus Legierungen mit Aluminium und/oder Magnesium. Der lineare Ausdehungskoeffizient für Eisen beträgt bekanntlich $1,2x10^{-5}$, der E-Modul $2,1x10^5$ N/mm², hingegen der Ausdehnungskoeffizient für Aluminium $2,2x10^{-5}$ und der E-Modul $0,65x10^5$ N/mm². Bei zunehmender Außentemperatur und Temperaturgleichheit von Felge und Reifenwulst wird also bei Verwendung einer Aluminiumfelge und eines Stahlwulstkernes die Pressung am Reifenfuß kleiner.

Die Betrachtung der Durchmesserschwankungen zusammenfassend war es also schon immer (und es ist bei der Erfindung auch weiterhin) wichtig, dass der durch die Betriebsbedingungen verursachbare Verformungsrest extrem klein ist. Die bei der erfindungsgemäßen Verformung eingesetzten Spannungen oder Flächenpressungen sind aber signifikant größer als die unter den vorgesehenen Betriebsbedingungen auftretenden. Und unter dieser höheren mechanischen Beanspruchung verhält sich der schwefelvulkanisierte Kautschuk - wie von den Erfindern entdeckt und in den Absätzen zuvor dargestellt - ganz anders. Dieses andere, für das erfindungsgemäße Verfahren ausgenutzte Werkstoffverhalten war aus einer Extrapolation des bisher bekannten Kraft-Verformung-Verhaltens nicht zu erwarten.

Die durch Anwendung wesentlich höherer mechanischer Spannungen erreichte Plastizität ist im Unterschied zum Verhalten der Thermoplasten und der thermoplastischen Elastomere nicht rückstandsfrei reversibel; bereits die einmalige Reversion einer zuvor erfindungsgemäß erzielten, "quasithermoplastischen" Verformung durch eine zweite entgegengerichtete quasithermoplastische Verformung hinterlässt eine kleine Verhärtung am Behandlungsort. Ein mehrfaches Durchlaufen eines solchen plastischen Verformungszyklus' führt schließlich zum Sprödbruch; von daher ähnelt das Gummi im gelehrten Belastungsbereich eher dem Plastizitätsverhalten der Metalle und nicht dem der thermoplastischen Polymere, hier kurz als Thermoplasten bezeichnet.

Ein besonderer Reiz der erfindungsgemäßen Lösung liegt darin, dass vom Wulst, ja überhaupt vom gesamten Reifen, während der Nachbehandlung kein Material entfernt zu werden braucht; und vorzugsweise wird dies gemäß Anspruch 2 auch nicht getan.

Gemäß Anspruch 9 wird (werden) zunächst in an sich bekannter Weise die Stelle(n) ermittelt, an der (denen) eine radiale Größe des Reifens einen Schwellwert überschreitet. Als radiale Größe (so ist es im Rahmen dieser gesamten Anmeldung gemeint) wird vorzugsweise die Radialkraft des Reifens heran gezogen, die in einer - dann etwa mittigen - oder mehreren axial verteilten Spuren als Funktion des Drehwinkels zuvor aufgenommen wird. Es ist aber auch möglich, als radiale Größe den Radius selbst des Reifens heranzuziehen; Schwankungen in der Cordlänge von Wulst zu Wulst werden hiermit genausogut aufgezeigt, allerdings werden Steifigkeitsschwankungen, wie sie etwa an Überlappungsstellen entstehen, weniger genau aufgezeigt.

Danach wird zumindest an der Stelle, wo diese radiale Größe des Reifens den Schwellwert überschreitet und am größten ist, vorzugsweise an allen Stellen, wo die radiale Größe einen Schwellwert überschreitend zu groß ist, die radiale Größe des Reifens verkleinert und zwar dadurch, dass dort der Wulstkern dichter an die sich im wesentlichen axial erstreckende Wulstsitzfläche heran gebracht wird.

Das örtliche Heranbringen des Wulstkernes an die etwa axiale Wulstsitzfläche erfolgt zweckmäßigerweise dadurch, dass gemäß Anspruch 3 die bereichsweise Umformung des Wulstes durch örtliche Einwirkung einer von radial innen nach radial außen drückenden Kraftkomponente gegen die sich im wesentlichen axial erstreckende Wulstsitzfläche des Reifens und durch Einwirkung von Wärme erfolgt. Es kommt also auf das Zusammenwirken von Kraft und Wärme an.

Mindestens eine der beiden zusammenwirkenden Komponenten Kraft und Wärme muss so örtlich differenziert sein, dass sie nur die umzuformende(n) Stelle(n) erfasst; gemäß Anspruch 3 ist die Kraft örtlich differenziert, was nach den bisherigen Untersuchungen leichter zu realisieren ist als die örtlich unterschiedliche Wärmeaufbringung gemäß Anspruch 4, die aber auch möglich ist. Ferner ist es natürlich auch möglich, sowohl Kraft als auch Wärme örtlich differenziert aufzubringen, also nicht über dem gesamten Wulstumfang gleichmäßig.

Wie schon gemäß Anspruch 9 so wird (werden) auch gemäß Anspruch 10 zunächst in an sich bekannter Weise die Stelle(n) ermittelt, an der (denen) eine radiale Größe des Reifens einen Schwellwert verletzt, in diesem Falle aber unterschreitet. Danach wird zumindest an der Stelle, wo diese radiale Größe des Reifens den Schwellwert unterschreitet und am kleinsten ist, vorzugsweise an allen Stellen, wo die radiale Größe einen Schwellwert unterschreitend zu klein ist, die radiale Größe des Reifens vergrößert.

Und zwar wird diese radiale Größe dadurch vergrößert, dass dort der Wulstkern weiter von der sich im wesentlichen axial erstreckenden Wulstsitzfläche weg gebracht wird.

Die örtliche Distanzvergrößerung zwischen Wulstkern und etwa axialer Wulstsitzfläche erfolgt zweckmäßigerweise dadurch, dass gemäß Anspruch 6 die bereichsweise Umformung des Wulstes durch örtliche Einwirkung einer den zu behandelnden Wulstbereich axial zusammen drückenden Kraftkomponente gegen seine sich im wesentlichen radial erstreckenden Begrenzungsflächen und durch Einwirkung von Wärme erfolgt. Es kommt also auch hier auf das Zusammenwirken von Kraft und Wärme an. Und wie bereits beim Anspruchspaar 3 und 4 erläutert, ist die örtliche Distanzvergrößerung auch mit örtlicher Differenzierung der Wärme anstelle der Kraft - was Gegenstand des Anspruches 7 ist - oder zusätzlich dazu möglich.

Hiermit ist erstmalig eine Distanzvergrößerung ohne die Notwendigkeit zusätzlicher Einzelteile und/oder Fügeoperationen wie Kleben möglich, während Distanzverkleinerungen ohne zusätzliche Einzelteile und/oder Fügeoperationen auch bislang möglich waren, allerdings nur durch Schleifen, also unter Materialverlust, was nachteiligerweise die Auswuchtung des Reifens beeinflusst und irreversibel ist.

Die Distanzvergrößerung gemäß den Ansprüchen 6 und/oder 7 ermöglicht gegenüber jeglicher Distanzverkleinerung - sowohl gegenüber einer erfinderischen gemäß Anspruch 3 und/oder 4 als auch gegenüber einer herkömmlichen durch Schleifen - die Kompensation größerer Fehler, weil von zwei, nämlich beiden axialen, Seiten her verlagerungsfähiges bzw. entfernbares Volumen angegriffen wird und nicht nur von einer, nämlich radial inneren, Seite her.

Der Anspruch 5 lehrt geeignete Bemessungen zur Erzielung einer Distanzverkleinerung gemäß den Ansprüchen 3 und/oder 4 und der Anspruch 8 lehrt geeignete Bemessungen zur Erzielung einer Distanzvergrößerung gemäß den Ansprüchen 6 und/oder 7. Demgemäß sollte die nach radial außen drückende bzw. axial zusammen drückende Kraftkomponente zwischen 50 und 150 N pro mm Umfangslänge des Sektors der sich im wesentlichen axial bzw. radial erstreckenden Wulstfläche bzw. Wulstflächen betragen, in dem die plastische Umformung des Wulstes erfolgen soll, und die Wärme zumindest im Bereich des Wulstes zwischen 100°C und 230°C - vorzugsweise zwischen 160°C und 180°C - betragen bei einer Dauer der gemeinsamen Einwirkung von Kraft und Wärme zwischen 10 Minuten und 45 Minuten.

Eine Variante der örtlich unterschiedlichen Wärmeaufbringung gemäß Anspruch 4 und/oder 7 ist bei Durchführung des erfindungsgemäßen Verbesserungsverfahrens dicht oder unmittelbar hinter der Vulkanisation, also zu einer Zeit wo der Reifen noch heiß ist, die örtlich unterschiedliche Kühlung: Bei dieser Variante wird also an der Verbesserungsvorrichtung überhaupt keine Wärme mehr in den Reifen eingebracht, sondern es werden die Bereiche, in denen am Wulst nichts verformt werden soll, gekühlt; nicht gekühlt oder zumindest weniger gekühlt werden aber die noch umzuformenden Bereiche. Im Gegenteil kann es sinnvoll sein, die umzuformenden Bereiche der Wülste mit wärmeisolierenden Mittel zu umhüllen.

Die Ausnutzung der Vulkanisations-Restwärme im Reifen ist natürlich auch bei nicht örtlicher Differenzierung der Wärme möglich, wie dies der Anspruch 3 und/oder 6 bei nur örtlicher Differenzierung der verformenden Kraft lehrt; dafür kann es sich empfehlen, die gesamten Reifenwülste wärmeisolierend zu umhüllen.

Das erfindungsgemäße Rundlaufverbesserungsverfahren eignet sich weniger zur Korrektur kurzwelliger Rundlaufstörungen, ist aber sehr geeignet zur Korrektur langwelliger Störungen; eine Korrektur erscheint möglich bis zur 6. Harmonischen, wobei eine örtliche Kraftdifferenzierung kurzwelligere Korrekturen zu ermöglichen scheint als eine örtliche Wärmedifferenzierung. Unter Berücksichtigung der bisherigen wirtschaftlichen Randbedingungen wird das erfindungsgemäße Verfahren zweckmäßigerweise nur zur Korrektur der ersten, zweiten und dritten Harmonischen der periodischen Funktion, die die radiale Größe über dem Drehwinkel darstellt, verwendet. Besonders leicht ist die Korrektur der ersten Harmonischen.

Entsprechend dieser Erkenntnis empfiehlt es sich gemäß den Ansprüchen 11 und 12, zunächst eine radiale Größe des Reifens - vorzugsweise seine Radialkraft - über mindestens eine volle Radumdrehung als Funktion des Raddrehwinkels zu ermitteln und danach einer so weit gehenden Fourier-Analyse zu unterziehen, dass zumindest die erste - vorzugsweise die erste, zweite und dritte - Harmonische dieser Funktion ermittelt wird.

Nach dieser Datenerfassung ist zu entscheiden, ob die Maxima der ausgefilterten Harmonischen verkleinert oder die Minima vergrößert werden sollen, oder ob sowohl Maximumsverkleinerung als auch Minimumsvergrößerung betrieben werden soll gemäß Anspruch 13, was sich insbesondere für die Behandlung der besonders wichtigen ersten Harmonischen empfiehlt. Es ist auch ein gemischtes Vorgehen möglich, zum Beispiel der Art, dass bei der 1. Harmonischen eine Minimumsvergrößerung und eine Maximumsverkleinerung durchgeführt wird, bei der zweiten Harmonischen allein eine Vergrößerung beider Minima und bei der dritten Harmonischen eine Verkleinerung der drei Maxima.

Für eine Maximumsverkleinerung wird gemäß Anspruch 11 dort, also im Bereich des Maximums bzw. der Maxima der betreffenden Harmonischen - das muss kein Maximum der Funktion der radialen Größe selber sein - die radiale Größe des Reifens verkleinert, und zwar dadurch dort verkleinert, dass dort der Wulstkern gemäß zumindest einem der Ansprüche 3 und 4 dichter an die sich im wesentlichen axial erstreckende Wulstsitzfläche heran gebracht wird.

Für eine Minimumsvergrößerung wird gemäß Anspruch 12 dort, also im Bereich des Minimums bzw. der Minima der betreffenden Harmonischen - das muss kein Minimum der Funktion der radialen Größe selber sein - die radiale Größe des Reifens vergrößert, und zwar dadurch dort vergrößert, dass dort der Wulstkern gemäß zumindest einem der Ansprüche 6 und 7 weiter von der sich im wesentlichen axial erstreckende Wulstsitzfläche weg gebracht wird.

Die durchschnittliche Radlast eines PKWs der unteren Mittelklasse, wie etwa VW Golf, Opel Astra, Ford Escort oder Toyata Corolla, liegt bei 2.750 N. Beim derzeitigen Stande der Reifenfertigungsechnologie beträgt an einem frisch vulkanisierten Reifen die typische Amplitude der überlagerten ersten Harmonischen je nach dem Preis, den der Abnehmer bereit ist zu bezahlen und demzufolge der Sorgfalt, die der Reifenhersteller aufwenden kann, zwischen 40 und 125 N, also zwischen etwa 1,5 % und 4,5 % der Radlast.

Häufig verlangt sind Reifen mit einer Amplitude der ersten Harmonischen kleiner oder gleich 80 N. Angenommen, es liegt ein Reifen vor, dessen Amplitude der ersten Harmonischen 85 N betrage, so braucht die Radialkraftänderung also nicht 85 N zu betragen sondern nur 5 N; wenn man aber schon mal den Reifen untersucht und handhabt, dann empfiehlt es sich, auch gleich eine größere Radialkraftänderung anzustreben, vorzugsweise um 20 % bis 60 % - besonders bevorzugt etwa 40 % - der zu verkleinernden Amplitude, in diesem Falle etwa um 35 N. Kurzum, die Höhe und Orientierung (und selbstverständlich auch die Phasenlage) der anzustrebenden zweckmäßigen Radialkraftänderung ergibt sich aus einem Vergleich der tatsächlichen Radialkraftschwankung mit der maximal tolerierten Radialkraftschwankung.

Ausgehend von den so ermittelten Daten und den Bemessungsangaben der Ansprüche 5 bzw. 8 lehrt Anspruch 14 die Bemessung der richtigen Einwirkungszeit t von umformender Kraft und Wärme nach folgender Formel:

$$t = c \; \frac{\partial R}{(T-T_o)^2}$$

Darin ist $\partial R_f$ die nach den oben genannten Gesichtspunkten festgelegte anzustrebende Radialkraftänderung, T die vorgesehene Umformtemperatur, c eine von der Gummimischung abhängige Konstante und $T_o$ die Glasübergangstemperatur der im Wulstbereich verwendeten Gummimischung.

Für die Gummimischungen, die im Reifenwulstbereich üblich sind, liegt die Konstante c zwischen 1,0 und 2,8 x $10^{-7}$ mm$^2$/K$^2$s, für die meisten PKW-Reifen zwischen 1,6 und 1,8 x $10^{-7}$ mm$^2$/K$^2$s. Die nach und gemäß einer solchen Berechnung durchgeführte Druck- und Wärmebehandlung des Reifenwulstes führt zu verblüffend niedrigen und gut reproduzierbaren Rundlauffehlern.

Die Erfinder haben sich nicht damit zufrieden gegeben, dass die meisten Radialkraftschwankungen innerhalb gängiger Reifenserien zufällig verteilt erscheinen. Sie konnten zeigen, dass bei Konfektion aller Reifenrohlinge einer Charge dergestalt, dass die erforderlichen Fügestellen in jeweils gleicher Phasenlage angeordnet werden, sich der größte Teil der Rundlaufabweichungen als systematischer Fehler darstellt. Deswegen und wegen der wie zuvor dargelegt guten Reproduzierbarkeit schlagen sie auf Anspruch 14 aufbauend in Anspruch 15 vor,

a) dass bei der Konfektion aller Reifenrohlinge einer Charge die erforderlichen Fügestellen in jeweils gleicher Phasenlage angeordnet werden und
b) dass alle Reifenrohlinge dieser Charge in einer bestimmten Phasenlage in die gleiche - vorzugsweise in die selbe - Vulkanisationsform gegeben und vulkanisiert werden,
c) dass danach ein repräsentatives Kollektiv von n Reifen - wobei n vorzugsweise gleich 8 - aus dieser Charge herausgegriffen wird
d) und alle Reifen dieses Kollektives abgekühlt werden - vorzugsweise unter 75° C -,
e) wonach jeder Reifen dieses Kollektives auf eine Messfelge aufgezogen wird und für für jeden Reifen dieses Kollektives eine radiale Größe ($R_\mu$) - vorzugsweise die Radialkraft - über dem Drehwinkel (phi) gemessen wird, wobei $\mu$ von 1 bis n laufen soll,
f) wonach diese individuell ermittelten Funktionsverläufe der radialen Größe $R_\mu=f_\mu$(phi) phasengerecht und linear gemittelt werden zu einer mittleren radialen Größe $R_m=f_m$(phi)=1/n x [$R_1+R_2+...+R_{(n-1)}+R_n$],
g) wonach in Abhängigkeit von der so bestimmten mittleren radialen Größe $R_m$(phi) die plastische Wulstumformung - im bevorzugten Falle gemäß Anspruch 14 - ermittelt wird und danach die so bestimmte plastische Wulstumformung an allen n Reifen dieses Kollektives durchgeführt wird,
h) dass danach jeder Reifen dieses Kollektives erneut abgekült wird - vorzugsweise unter 75°C -, erneut auf eine Messfelge aufgezogen wird und für für jeden Reifen dieses Kollektives erneut die radiale Größe (R) über dem Drehwinkel (phi) gemessen und mit vorgegebenen Toleranzfeldern verglichen wird und
i) im Falle der Einhaltung vorgegebener Toleranzfelder alle restlichen Reifen dieser Charge in gleicher Weise den Wulst (2) bereichsweise plastisch umformend behandelt werden.

Nach einer bevorzugten Weiterbildung dieses Verfahrens soll gemäß Anspruch 16 im seltenen Falle der Nichteinhaltung der vorgegebenen Toleranzfelder gemäß Merkmal h) des Anspruches 15 ein weiteres repräsentatives Kollektiv aus dieser Charge entnommen wird,

- wobei besagtes weiteres Kollektiv keine Reifen aus dem ersten Kollektiv enthält,

- wonach besagtes weitere Kollektiv entsprechend den Merkmalen d) bis h) des Anspruches 15 behandelt wird,
- wonach im Falle der Einhaltung vorgegebener Toleranzfelder alle restlichen Reifen dieser Charge in gleicher Weise den Wulst bereichsweise plastisch umformend behandelt werden.

Die Reifen des ersten Versuches des Rundlaufverbesserung sind damit als nicht-repräsentativ erkannt und ausgeschieden; sie werden zweckmäßigerweise individuell behandelt, oder in ihrer Qualitätskennzeichnung abgewertet. Da sich nach den bisherigen Versuchserfahrungen die Nicht-Repräsentativität des zuerst zufällig ausgewählten Kollektives nur sehr selten zeigt, überwiegen die wirtschaftlichen Vorteile der kollektiven Reifenbehandlung den Nachteil der selten erforderlichen Zweitbehandlung oder Abwertung.

Die höchste und gleichmäßigste Reifenqualität wird erreicht, wenn gemäß Anspruch 17 eine radiale Größe - vorzugsweise die Radialkraft - nicht nur in einer einzigen Messspur, die dann im Zenitbereich des Reifens zu liegen hätte, gemessen würde, sondern in zwei Spuren, nämlich eine rechts und eine links der Reifenmitte gemessen wird. Bei Abweichungen - sei es dem Betrage, sei es der Phasenlage nach - der Schwankung der besagten radialen Größe können dann beide Wülste des Reifens voneinander verschieden - vorzugsweise aber dennoch gleichzeitig - plastisch umgeformt werden. Dabei ist mit den Worten "verschieden umgeformt" nicht nur gemeint, dass der Betrag der Umformung an beiden Wülsten verschieden sein kann, sondern auch, dass der oder die Bogenlängenbereich(e), in dem bzw. in denen der eine Wulst plastisch umgeformt wird, von dem bzw. von den Bogenlängenbereich(en), in dem der andere Wulst plastisch umgeformt wird, abweichen kann. Nach den bisherigen Versuchsergebnissen sind Betragsabweichungen genauso gut durch eine Temperatur- wie durch eine entsprechende Umformkraft-Differenzierung zu erreichen; eine Phasenabweichung ist zwar auch sowohl durch Temperatur- als auch durch Umformkraft-Differenzierung erzielbar, durch eine Umformkraft-Differenzierung aber leichter.

Unabhängig von der Frage, ob nun der Einfachheit halber beide Wülste in gleicher Weise behandelt werden oder der höheren Präzision halber voneinander verschieden behandelt werden, gibt es die zwei - auch miteinander kombinierbaren - Möglichkeiten, an zuvor festgelegten Umfangsstellen eine plastische Umformung zu erzielen, an anderen aber nicht:

a) ein zu behandelnder Wulst wird auf seinem gesamten Umfang einer Spreizspannung ausgesetzt, erhält aber nur an den umzuformenden Stellen eine Temperatur oberhalb der erforderlichen Umformtemperatur
(Stichwort: Örtlichkeit der Temperatur)

und/oder

b) ein zu behandelnder Wulst erhält auf seinem gesamten Umfang eine Temperatur oberhalb der erforderlichen Umformtemperatur, wird aber nur an den umzuformenden Stellen einer so hohen Spreizspannung ausgesetzt, dass sich eine plastische Umformung einstellt
(Stichwort: Örtlichkeit der Umformkraft).

Zur Temperaturaufbringung, besonders leicht im Falle b), ist es möglich, anstelle einer Aufheizung mit separater Wärmezufuhr die ohnehin vorhandene Vulkanisationswärme zu nutzen. Dazu werden zweckmäßigerweise gemäß Anspruch 18 die Reifen einer Charge - abgesehen von den Reifen des bzw. der repräsentativen Kollektive(s) -

- durch hinreichend kurzen zeitlichen Abstand zwischen der Entnahme aus der Vulkanisationsform und Durchführung der zumindest bereichsweisen plastischen Wulstumformung und/oder
- durch wärmeisolierende, zumindest die Reifenwülste umhüllende Mittel
- in ihrer Abkühlung so weit gebremst, dass die Reifen zumindest im Wulstbereich beim Aufziehen auf die die Wulstumformung bewirkende Vorrichtung ohne Zufuhr von Wärmeenergie in den Reifenwulst noch eine Temperatur zwischen 100°C und 230°C, vorzugsweise zwischen 160°C und 180°C aufweisen.

Aus solcher Vorgehensweise ergibt sich eine gegenüber dem Stand der Technik unveränderte Energiebilanz des Herstellungsprozesses. Aufgrund der relativ hohen spezifischen Wärme von Gummi und Metall und der geringen Wärmeleitfähigkeit von Gummi ergibt sich so weiterhin ein besonders rascher Verfahrensablauf, weil dem geringen zusätzlichen Zeitaufwand für das Auf- und das Absetzen der Wärmeschutzkappen der Wegfall der ansonsten anfallenden, durchaus beträchtlichen Aufheizzeit gegenüber steht.

Die Örtlichkeit der Wärmezufuhr ist aufgrund der Wärmeträgheit der Heizvorrichtungen schwieriger zu realisieren als die Örtlichkeit der Kraftzufuhr und nur eine von beiden muss örtlich erfolgen (aber natürlich dürfen beide örtlich erfolgen). Die Örtlichkeit der Wärmezufuhr im Hinblick auf die Phasenlage gelingt noch am leichtesten, wenn die Heizeinrichtung auf der Vorrichtung in fester Phasenlage angeordnet ist und die erforderliche Variabilität der Phasenlage durch eine phasengerechte Aufbringung des zu verformenden Reifens auf diese Vorrichtung erreicht wird anstelle einer Reifenaufbringung in beliebiger Phasenlage und Phaseneinstellbarkeit der Heizeinrichtung. Bei letztgenannter Ausführung müssten nämlich erhebliche Ströme über variable Strompfade geschaltet werden, was in der Umgebung von Gummi Schwelungen hervorrufende Lichtbögen auslösen kann.

Dieses Problem in der Erzielung einer Örtlichkeit der Wärmeeinwirkung (also einer nicht auf den gesamten Umfang gleichmäßig einwirkenden, sondern einer örtlich konzentrierten Wärmeeinwirkung) besteht nicht, wenn diese Örtlichkeit nicht durch an einem Ort konzentrierte Energiezufuhr erreicht wird sondern durch an diesen Ort konzentrierte Wärmeisolation und/oder durch an den komplementären Orten konzentrierte Kühlung. Letzteres ist Gegenstand des Anspruches 19, wonach die Örtlichkeit der Einwirkung von Wärme dadurch erzielt wird, dass vor Aufbringung der umformenden Kraft die Bereiche des Wulstes, die im wesentlichen unverformt bleiben sollen, gekühlt werden, vorzugsweise auf eine Temperatur unter 75°C.

Den bisherigen Beschreibungsteilen liegt die Erkenntnis zugrunde, dass wie auch immer zustande gekommene Reifenungleichmäßigkeiten durch eine nachträgliche gezielte plastische Wulstumformung verringert oder gar beseitigt werden können. Dabei beinhaltet das Wort "gezielt", dass zunächst in mindestens einer Messspur, vorzugsweise in zwei Messspuren, die eventuellen Ungleichmäßigkeiten - vorzugsweise der Radialkraft - ihrem Betrage und ihrer Phasenlage nach bestimmt werden und dann eine dem Betrage und der Phasenlage nach daraus berechnete Wulstumformung durchgeführt wird.

Ein statistischer Vergleich so nachbehandelter Reifen mit nicht nachbehandelten Reifen hat das überraschende Ergebnis geliefert, dass so nachbehandelte Reifen nicht etwa höhere Schwankungen der Materialdicke zwischen dem Wulstkerninnenradius und dem Wulstinnenradius zeigen sondern geringere. Zunächst wurde eine größere Schwankung über dem Umfang erwartet, weil ja eine Umformung aufgeprägt wird. Diese unerwartete Tatsache lässt vermuten, dass ein erheblicher Teil - etwa ein Drittel - der erfindungsgemäß zu kompensierenden Reifenungleichförmigkeit eben gerade Schwankungen vorgenannter Materialdicke, auch "Innengummierungsdicke" genannt, sind. In diesem Umfange ist die vorgenannte gezielte plastische Wulstumformung also nicht nur ein Symptome bekämfendes Verfahren sondern ein in die Kausalkette eingreifendes Verfahren.

Entsprechend vorgenannter Erkenntnis wird im statistischen Durchschnitt bereits mit einer ungezielten, aber gleichmäßigen - und damit vergleichmäßigenden - plastischen Wulstumformung die Reifengleichförmigkeit verbessert. Das Wort "gleichmäßig" meint hiermit die Wege der verformenden Segmente; die Kräfte sind durchaus nicht gleichmäßig: in den Phasenstellungen, wo sich mehr Gummi unterhalb des Wulstkernes befindet, wird bei gleichmäßigen Wegen mehr umformende Kraft aufgebracht als in den Phasenstellungen, wo sich weniger Gummi unterhalb des Wulstkernes befindet.

Analog der - dem Wege nach - gleichmäßigen Wulstaufweitung führt auch eine - ebenfalls dem Wege nach - gleichmäßige Schrumpfung der lichten Weite der Wülste ebenfalls zu einer Vergleichmäßigung im Radialkraftschrieb. Dies ist - ebenfalls im Anspruch 20 angesprochen - durch ein dem Wege nach gleichmäßiges axiales Zusammenstauchen unter Druckausübung auf die sich im wesentlichen radial erstreckenden Flächen des Wulstes möglich.

Alle genannten Weiterbildungen des erfindungsgemäßen Verfahrens, der plastischen Wulstumformung nach der Reifenvulkanisation, zeigen, dass für ihre Durchführung neue Vorrichtungen zu schaffen sind. Nach bisheriger Kenntnis sind diese Vorrichtungen für nichts anderes geeignet als eben die Durchführung der genannten Verfahren.

Zweckmäßigerweise wird die erste Variante der Erfindungsweiterbildung gemäß Anspruch 20 dadurch verwirklicht, dass der Reifenwulst auf eine konische Kalibrierfelge gemäß Anspruch 21 bei einer Wulsttemperatur zwischen 100°C und 230°C axial aufgedrückt wird. Hierdurch wird die Materialverteilung im Kernbereich, insbesondere zwischen Wulstkerninnenumfang und Wulstinnenumfang, vergleichmäßigt.

Die Vorrichtung gemäß Anspruch 21 lässt sich dahingehend abwandeln, dass den Wulst aufweitende, konische Trommel im Querschnitt nicht rund sondern mit einer Unrundheit erster oder zweiter oder dritter Ordnung ausgeführt ist, was zu einer Vorrichtung gemäß Anspruch 22 führt.

Mit "Unrundheit erster Ordnung" ist gemeint, dass die Querschnittskontur in jeder axialen Position der Querschnittsebene dargestellt in Polarkoordinaten keinen konstanten Radius zeigt, sondern einen schwankenden Radius R gemäß einer Funktion $R = R_m + c \sin phi$. Dies führt zu einer eiförmigen Querschnittskontur.

Mit Unrundheit zweiter Ordnung ist gemeint, dass die Querschnittskontur in jeder axialen Position der Querschnittsebene dargestellt in Polarkoordinaten einen Radius R zeigt gemäß einer Funktion $R = R_m + c \sin(2 phi)$. Dies führt zu einer ellipsenförmigen Querschnittskontur.

Analog ist mit einer Unrundheit dritter Ordnung gemeint, dass die Querschnittskontur in jeder axialen Position der Querschnittsebene in Polarkoordinaten einen schwankenden Radius R gemäß einer Funktion $R = R_m + c \sin(3 phi)$. Dies führt zu einer Querschnittskontur ähnlich einem stark verrrundeten Dreieck.

Entsprechend könnte man auch bis zu noch höheren Ordnungen gehen, die aber in der Regel keine große Rolle mehr spielen; am wichtigsten ist die Senkung der Amplitude der ersten Harmonischen.

Mit einer Vorrichtung gemäß Anspruch 22 wird an den Orten größerer Krümmung der Trommel im Querschnitt, also an den Maxima von R, eine größere Pressung zwischen Wulstkern und Wulstsitzfläche aufgebaut als an den Stellen kleinerer Krümmung im Trommelquerschnitt. Also wird dort zumindest mehr oder gar nur da Gummi verdrängt und dies selbst dann, wenn der bearbeitete Reifenwulst nicht örtlich, sondern gleichmäßig heiß ist zwischen 100°C und 230°C. Hiermit kann also ein Verfahren gemäß Anspruch 3 durchgeführt werden. Eine Lokalisierung der Wärmeeinwirkung ist zusätzlich möglich, zum Beispiel durch unterschiedlich starke Wärmeleitung.

Ein Vorteil einer Vorrichtung nach Anspruch 21 wie nach 22 ist die mögliche Einteiligkeit der konischen Trommel, sodass der Bauaufwand besonders gering ist und keine Spalten zwischen Segmenten hingenommen oder überbrückt werden müssen. Nachteilig ist allerdings die Gleitbewegung an der inneren Wulstsitzfläche, eine Schmierung daselbst empfehlend.

Für die Durchführung der zweiten Verfahrensvariante nach Anspruch 20, also mit einer Schrumpfung anstelle einer Aufweitung der lichten Weite eines Wulstes, wäre anstelle einer konischen Kalibrierfelge oder einer Trommel, von der alle Segmente über eine entsprechende Zwangssteuerung gleich weit herausgefahren werden, eine solche Vorrichtung nötig, die zwei spannbackenähnliche Ringe pro Wulst aufweist die axial aufeinander zu bewegbar sind und bei solcher Bewegung den betreffenden Wulstkern zwischen sich axial zusammenquetschen. Dafür braucht nur einer der beiden Ringe beweglich zu sein und keiner der Ringe braucht in Segmente untergliedert zu sein.

Die letztgenannte, nicht in Segmente untergliederte Bauform der beiden axial aufeinander zu beweglichen Ringe führt zu einem besonders geringen Bauaufwand und einer - infolge der spalten- und kantenfreien Gestaltung - besonders guten Oberflächenqualität am fertigen Reifenwulst; eine so ausgeführte Vorrichtung ist Gegenstand des Anspruches 23.

Die plastische Umformung erfolgt beim Zusammenfahren der beiden je einen Wulst axial zusammendrückenden Ringe im wesentlichen in den Bereichen, in denen sich besonders viel Material seitlich des Wulstkernes befindet und demzufolge in der Regel besonders wenig Material unterhalb des Wulstkernes. Infolgedessen führt die Wegegleichheit bei der Umformung zu einer Vergleichmäßigung der Geometrie.

Die Vorrichtung gemäß Anspruch 23 lässt sich dahingehend abwandeln, dass die beiden einen Wulst angreifenden Ringe nicht koaxial sondern mit einer einstellbaren Desaxierung zueinander geführt sind, was zur Vorrichtung gemäß Anspruch 24 führt, die sich zur Durchführung von Verfahren gemäß den Ansprüchen 6 und/oder 7 geeignet ist.

Mit "desaxierbar" ist gemeint, dass sich die Rotationsachsen beider Ringe zwar in einem Punkte auf der Hälfte des mittleren Abstandes zwischen beiden Ringen treffen (was "konzentrisch" besagt), aber auch nur in einem Punkte treffen, also nicht zusammenfallen (was "koaxial" hieße), sondern in einem einstellbaren spitzen Winkel zueinander stehen. Würde man die Vorrichtung rotieren lassen, so erschiene mindestens einer der beiden Ringe als taumelnd.

Diese Art der Verfahrensdurchführung erlaubt zwar nur die Bekämpfung der ersten und nicht der höheren Harmonischen der Radialkraftschwankung oder der Radiusschwankung, dafür aber sind die dazu erforderlichen Vorrichtungen besonders preiswert zu erstellen, besonders zuverlässig im Betrieb und es ergibt sich eine erstklassige Oberflächenqualität, was letzlich an der Einteiligkeit der Pressringe liegt.

Nachfolgend werden universeller einsetzbare Vorrichtungen beschrieben, die insbesondere auch die Bekämpfung höherer Harmonischer zulassen, allerdings auch infolge ihrer Mehrteiligkeit aufwendiger sind.

Für die Verfahrensvarianten, wo Gummi von radial innen nach radial außen gepresst wird, also Verfahrensvarianten gemäß Anspruch 3 und/oder 4, hat auch die mehrteilige Vorrichtung die Gestalt einer Trommel. Letztere weist mindestens zwei Segmente auf, von denen mindestens eines radial beweglich sein muss; vorzugsweise sollte sie mehr Segmente aufweisen, besonders bevorzugt zwölf. Vorzugsweise sind all ihre Segmente radial beweglich.

Trommeln mit diesen Merkmalen sind an sich bekannt und werden bislang in der Reifenindustrie zum Aufbau von Reifenrohlingen verwendet.

Um für das erfindungsgemäße Verfahren verwendbar zu sein, müssen solche Trommeln ganz erheblich größere Spreizkräfte ohne Schäden aufbringen können, nämlich solche, wie sie sich nach Multiplikation mit der jeweiligen Umfangslänge aus dem Anspruch 5 ergeben. Die Belastbarkeit der für die Durchführung erfindungsgemäßer Verfahren erforderlicher Trommeln liegt um mehr als zwei Zehnerpotenzen über der der vorbekannten Trommeln. Schon von der Bemessung ihrer Spreizmechanismen her unterscheiden sich die hier in Rede stehenden, gemäß Anspruch 25 neu zu schaffenden Trommeln also erheblich von den in der Reifenindustrie vorbekannten.

Sofern nicht von der Möglichkeit der Vulkanisationswärmeausnutzung gemäß Anspruch 18 Gebrauch gemacht wird, benötigen Trommeln für die Verfahrensdurchführung darüberhinaus die Beheizbarkeit mindestens eines - vorzugsweise aller - ihrer Segmente gemäß Anspruch 26. Demgemäß ist die Segmentfläche, die zur Berührung und plastisch verformenden Pressung auf die sich im wesentlichen axial erstreckende Wulstsitzfläche vorgesehen ist, mindestens eines der Segmente so stark beheizbar, dass eine Temperatur zwischen 100°C und 230°C - vorzugsweise zwischen 160°C und 180°C - erreicht werden kann.

Wenn jedoch von der Möglichkeit der Vulkanisationswärmeausnutzung Gebrauch gemacht werden soll, so braucht kein einziges Segment beheizbar zu sein; wie bereits zuvor dargelegt, sind solche Ausführungen in der Großserien-Fertigung und Nachbehandlung bevorzugt.

Im Hinblick auf eine Verfahrensdurchführung zur Ermöglichung einer Verfahrensausgestaltung gemäß Anspruch 19 sind gemäß Anspruch 27 solche Trommelausführungen bevorzugt, bei denen mindestens eines - vorzugsweise all - ihre Segmente so kühlbar ist bzw. sind, dass dessen bzw. deren Segmentfläche(n), die zur Berührung und plastisch verformenden Pressung auf die sich im wesentlichen axial erstreckende Wulstsitzfläche vorgesehen ist bzw. sind, eine Temperatur unter 100°C - vorzugsweise unter 75°C - erreichen kann bzw. können.

Für die Durchführung eines Verfahrens analog Anspruch 20 wäre als äquivalenter Ersatz einer konischen Kalibrierfelge auch die Verwendung einer solchen Trommel möglich, von der alle Segmente über eine entsprechende Zwangssteuerung gleich weit herausgefahren werden. Die plastische Umformung erfolgt dann im wesentlichen in den Bereichen, in denen sich besonders viel Material unterhalb des Wulstkernes befindet.

Solchermaßen über dem Umfang nur gleichmäßig spreizbare Trommeln sind weiterhin brauchbar für die Verfahrensvarianten, wo die Temperaturbeaufschlagung örtlich erfolgt, sei es durch örtliche Erwärmung, sei es durch Kühlung an komplementären Orten.

Besonders bevorzugt sind aber solche Trommelausführungen, bei denen gemäß Anspruch 28 die Segmente unterschiedlich weit heraus gefahren werden können. Hiermit kann besonders genau und für nahezu alle Fälle die optimale örtliche Verteilung (kurz in dieser Anmeldung als "Örtlichkeit" bezeichnet) der Umformkraft erzielt werden.

Für die Verfahrensvarianten, wo Gummi von den Seiten nach radial innen gepresst wird, also Verfahrensvarianten gemäß Anspruch 6 und/oder 7, hat auch die mehrteilige Vorrichtung eine Gestalt, die man als einen Schraubstock mit ringförmigen Spannbacken bezeichnen könnte. Da allerdings nur Schraubstöcke mit kurzen, geraden Spannbacken bekannt zu sein scheinen, wird hier nur der allgemeinere Begriff "Vorrichtung" verwendet.

Eine solche Vorrichtung weist gemäß Anspruch 29 mindestens zwei Ringe auf zur Erfassung eines Reifenwulstes, wobei zumindest einer der Ringe in zumindest zwei, vorzugsweise zwölf, Segmente gegliedert ist, wovon sich mindestens eines axial bewegen lässt. Vorzugsweise sind alle Segmente eines oder beider Ringe axial beweglich.

Im Prinzip würde es bereits ausreichen, wenn nur Segmente eines der beiden für jeden Wulst zusammenwirkenden Ringe axial verschieblich sind und dann vorzugsweise die Segmente des axial inneren Ringes. Auf der axial inneren Seite stören nämlich die an den Segmentgrenzen - insbesondere bei deutlich unterschiedlichen Ausfahrwegen benachbarter Segmente - möglichen Absätze und entfernt austriebähnlichen Grate weniger als an der axial äußeren Seite, wo sie die Bündigkeit der Anlage zwischen Felgenhorn und Reifenwulst beeinträchtigen könnten.

Zur Vermeidung von Absätzen und Graten ist es zudem - genauso wie bei den von radial innen nach radial außen pressenden - Vorrichtungen möglich, einen glättenden Gummiring bzw. eine glättende Gummimanchette über den vorzugsweise aus Metall gefertigten Segmenten anzuordnen, sodass diese relativ harten Segmente nicht direkt sondern nur vermittels des glättenden Gummibauteiles auf den plastisch zu verformenden Wulst einwirken.

Besonders große Verlagerungen des Wulstkernes weg von der Wulstsitzfläche sind möglich, wenn sich gemäß Anspruch 30 die einander axial gegenüberliegenden Segmente beider Ringe axial gegeneinander bewegen lassen. Dabei ist es möglich, mit der Segmentzustellung des axial äußeren Ringes nur langwellige Störungen, vorzugsweise nur die der ersten Harmonischen zu bekämpfen, bei der Segmentzustellung des axial inneren Ringes jedoch kurwelliger vorzugehen, vorzugsweise zwei Maxima vorzusehen, von denen eines gleichphasig ist zum vorzugsweise einzigen Maximum in der Segmentzustellung des axial äußeren Ringes.

Ferner ist es möglich bei Verwendung zweier Ringe von axial zustellbaren Segmenten, dass nur einer der Ringe, dann vorzugsweise der axial äußere, auf seiner dem zu bearbeitenden Wulst zugewandten Seite einen kantenausgleichenden Gummiring aufweist.

Analog den Trommeln und dem dortigen Anspruch 26 benötigen auch die hier behandelten, schraubstockähnlichen, Vorrichtungen zur axialen Wulstzusammenpressung zumindest dann, wenn nicht von der Möglichkeit der Vulkanisationswärmeausnutzung gemäß Anspruch 18 Gebrauch gemacht wird, die Beheizbarkeit mindestens eines - vorzugsweise aller - ihrer Segmente gemäß Anspruch 31. Demgemäß ist bzw. sind mindestens eines - vorzugsweise alle - ihrer Segmente so beheizbar, dass dessen bzw. deren Segmentfläche(n), die zur Berührung und plastisch verformenden Pressung auf die sich im wesentlichen radial erstreckenden Flächen vorgesehen ist bzw. sind, eine Temperatur zwischen 100°C und 230°C - vorzugsweise zwischen 160°C und 180°C - erreichen kann bzw. können.

Wenn jedoch von der Möglichkeit der Vulkanisationswärmeausnutzung Gebrauch gemacht werden soll, so braucht kein einziges Segment beheizbar zu sein, wie dies schon analog bei den radial drückenden Trommeln gesagt wurde. Wie bereits anlässlich der Beschreibung der Verfahrensausgestaltungen gemäß den Ansprüchen 18 oder 19 dargelegt, sind solche Ausführungen in der Großserien-Fertigung und Nachbehandlung bevorzugt.

Im Hinblick auf eine Verfahrensdurchführung zur Ermöglichung einer Verfahrensausgestaltung gemäß Anspruch 19 sind gemäß Anspruch 32 - analog dem Anspruch 27 für Trommeln - solche Vorrichtungsausführungen bevorzugt, bei denen mindestens eines - vorzugsweise all - ihre Segmente so kühlbar ist bzw. sind, dass dessen bzw. deren Segmentfläche(n), die zur Berührung und plastisch verformenden Pressung auf die seitlichen, sich im wesentlichen radial erstreckenden Wulstflächen vorgesehen ist bzw. sind, eine Temperatur unter 100°C - vorzugsweise unter 75°C - erreichen kann bzw. können.

Die größte Flexibilität im Einsatz - freilich auch unter Inkaufnahme des höchsten Bauaufwandes - haben Trommeln gemäß Anspruch 33, bei denen jedes ihrer Segmente durch voneinander unabhängige Kühlung und/oder Heizung auf verschiedene Temperaturen einstellbar ist.

Wie alle mehrteiligen, plastisch verformenden Werkzeuge, so haben auch die in dieser Anmeldung behandelten mehrteiligen Trommeln und Ringe das Problem, dass Kanten in das zu verformende Werkstück Wulst gepresst werden könnten, die unerwünscht sind, ganz besonders unerwünscht an der radial inneren Wulstsitzfläche, wo die heutzutage üblichen, schlauchlos zu fahrenden Reifen die erforderliche Luftdichtigkeit gegenüber der Felge erreichen. An anderer Stelle dieser Anmeldung wurde bereits vorgeschlagen, diese Kanten und Spalten mit Gummimanschetten abzupolstern bzw. zu überbrücken.

Anspruch 34 nennt als Alternative, die angreifenden Werkzeugsegmente in der Nähe ihrer Grenzen "zurückzunehmen", das heißt, in Grenznähe die Segmente so sanft auslaufen zu lassen, dass sie dort keinen für eine Verformung ausreichenden Druck mehr ausüben. Auf eine Trommel konkretisiert heißt dies, dass die gegeneinander beweglichen Segmente an ihren Grenzen - auch Fügestellen genannt - abgeflacht sein sollen.

Zur Senkung der zur Umformung erforderlichen Kräfte und besonders zur weiteren Steigerung der Reproduzierbarkeit der erzielten plastischen Umformungen am fertig vulkanisierten Reifenwulst empfiehlt es sich gemäß Anspruch 35, den Wulst während der plastisch umformenden Nachbehandlung zumindest bereichsweise - insbesondere natürlich in den Bereichen, in denen die einzige bzw. größte Umformung erzielt werden soll - in Vibration zu versetzen, vorzugsweise im Ultraschallbereich. Dies kann erreicht werden durch ein hochfrequent wechselndes, auf den eisenhaltigen Wulstkern einwirkendes Magnetfeld. Der Kraftangriff kann also zunächst per elektrischem und/oder magnetischem Wechselfeld zunächst auf den Wulstkern erfolgen und erst von ihm auf den zu verformenden Wulstgummi weiter gereicht werden.

Wird ein solches Feld umlaufend, also rotierend aufgebracht, so kann dies auch gleichzeitig zur induktiven Wulstaufheizung verwendet werden, wobei dadurch ein Wärmefluss vom Wulstkern zur Wulstoberfläche bewirkt wird.

Eine örtliche (=gezielte), also über dem Umfang ungleichmäßige Vibrationseinleitung erscheint hingegen leichter dadurch erzielbar, dass zumindest eines der den Wulst während der plastischen Umformung berührenden Bauteile vibriert.

Die Erfindung wird nachfolgend anhand einiger Figuren erläutert. Es zeigt:

Fig. 1    einen bekannten Fahrzeugluftreifen mit einer RKS, von der das Maximum der ersten Harmonischen markiert ist,

Fig. 2    den zugehörigen RKS-Schrieb und die zugehörige erste Harmonische,

Fig. 3    schematisch eine Vorrichtung, die zur Reduktion der Maxima der ersten Harmonischen und - in leichter Abwandlung - auch der zweiten Harmonischen verwendbar ist und zwar jeweils mittels radialen Kraftangriffes,

Fig. 4    die Vorrichtung nach Fig. 3 in Aktion zur Reduktion der ersten Harmonischen,

Fig. 5    zum Vergleich mit Fig. 2 den danach erreichten RKS-Schrieb,

Fig. 6    schematisch eine Vorrichtung, die zur Anhebung von Minima des RKS-Schriebes verwendbar ist mittels axialen Kraftangriffes,

Fig. 7    in einem vergrößerten Ausschnitt aus Figur 6 den Wulstbereich des zu behandelnden Reifens samt der beiden zum Angriff bereit stehenden Werkzeuge und

Fig. 8    analog Fig. 7 den gleichen Reifenbereich nach Vollendung der Wulstbehandlung mit den noch anliegenden Werkzeugen.

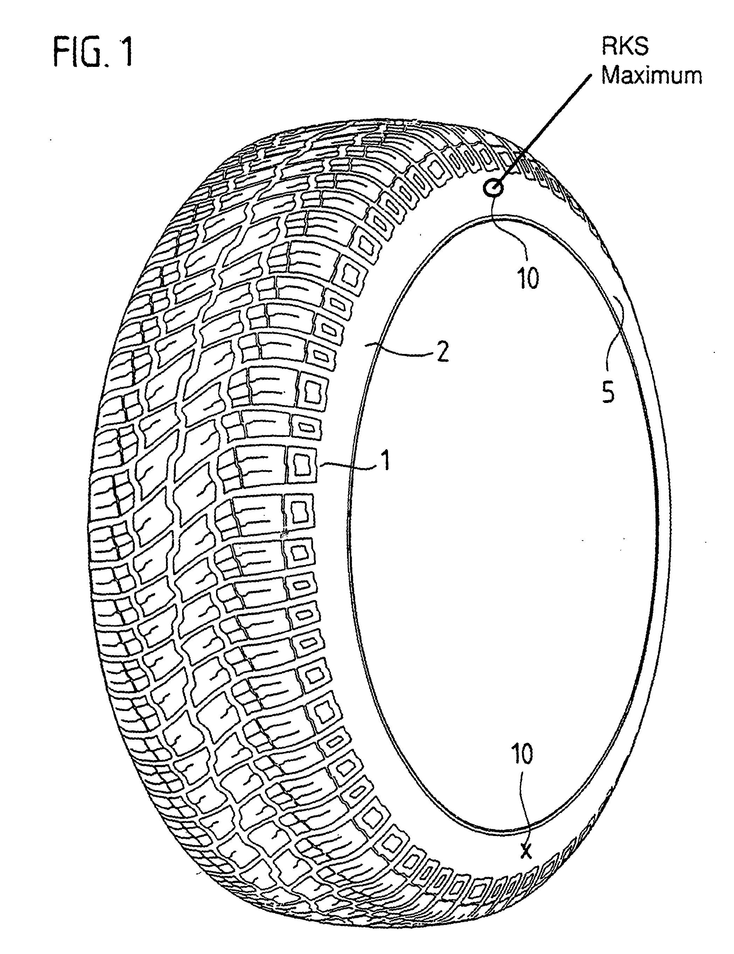

**Figur 1** zeigt einen bekannten Fahrzeugluftreifen 1 mit einem Wulst 2. Der Reifen 1 weist eine Radialkraftschwankung (=RKS) auf. Die Stelle des Maximums dieser RKS ist mittels einer Marke 10 deutlich sichtbar auf einer Reifenseitenwand 5 am Reifen 1 angegeben. RKS-Analysen und die dazu zweckmäßigen Vorrichtungen sind den Fachleuten geläufig; sie sind zum Beispiel in der DE-OS 43 39 775.1 A1 beschrieben.

Alle verwendeten Marken 10 sollten so gestaltet sein, dass sie sowohl vom Bedienungspersonal - ohne alle Hilfsmittel wie Lupe, Brille, Magnetfelddetektor etc. - gelesen werden können als auch von automatisierten Maschinen. Vorzugsweise werden als Markierungen 10 so bedruckte, abziehbare Klebeetiketten verwendet, dass für die nachfolgenden Behandlungsschritte ein geraffter Datenauszug aus der RKS-Analyse präsent ist.

Vorzugsweise geschieht die Datenraffung in der Form, dass die Stelle des Maximums der ersten Harmonischen markiert wird, beispielsweise durch einen roten Kreis, innerhalb dessen die Amplitudenhöhe verzeichnet ist.

Die Markierung des Minimums der ersten Harmonischen ist danach nicht mehr notwendig, weil sie sich per definitionem um 180° phasenversetzt befindet. Die Markierung des Minimums empfiehlt sich aber dennoch, weil damit zum einen eine Redundanz erreicht wird (würde beispielsweise versehentlich ein Klebeetikett abgerissen, von jemandem auf dem Boden aufgelesen und wieder aufgeklebt, aber leider an einer falschen Stelle, so würde die Redundanz einen solchen Fehler aufdecken) und zum anderen die eventuelle alternative oder zusätzliche Behandlung des Minimums erleichtert wird.

Zur Markierung des Minimums der ersten Harmonischen könnte sich beispielsweise ein grünes X eignen, auf dem ebenfalls die (abgesehen vom Vorzeichen natürlich gleiche) Amplitudenbetrag verzeichnet ist.

Soweit der erzielbare Preis für den Reifen auch noch die Überprüfung und ggf. Behandlung der zweiten Harmonischen zulässt, könnten mit je einem roten Doppelkreis (entweder zwei Kreise nebeneinander oder - bevorzugt - zwei konzentrische, unterschiedlich große Kreise) die beiden Maxima der zweiten Harmonischen und mit je einem grünen Doppel-X die beiden Minima der zweiten Harmonischen markiert werden. Auch in bzw. bei diesen Marken sollte die zugehörige Amplitudenhöhe angegeben sein.

Analog könnte man mit drei konzentrischen Kreisen bzw. mit XXX die Extrema der dritten Harmonischen markieren und danach behandeln; nach bisheriger Einschätzung aber fehlt hierfür die Zahlungsbereitschaft der Reifenkäufer.

Der Begriff "Harmonische" wird hier immer im Bezug auf und im Einklang mit Fourier-Analysen verwendet. Die erste Harmonische ist also eine Sinuswelle über dem Drehwinkel mit nach Fourier bestimmbarer Amplitude und Phasenlage und mit der Periodenlänge 360°; die zweite Harmonische ist eine Sinuswelle über dem Drehwinkel mit nach Fourier bestimmbarer Amplitude und Phasenlage und mit der Periodenlänge 180°; die dritte Harmonische ist eine Sinuswelle über dem Drehwinkel mit nach Fourier bestimmbarer Amplitude und Phasenlage und mit der Periodenlänge 90° und so weiter. Der reale RKS-Schrieb soll also zuerst einer Fourier-Analyse unterzogen werden. In der Regel kann diese Analyse bereits nach der zweiten Harmonischen abgebrochen werden.

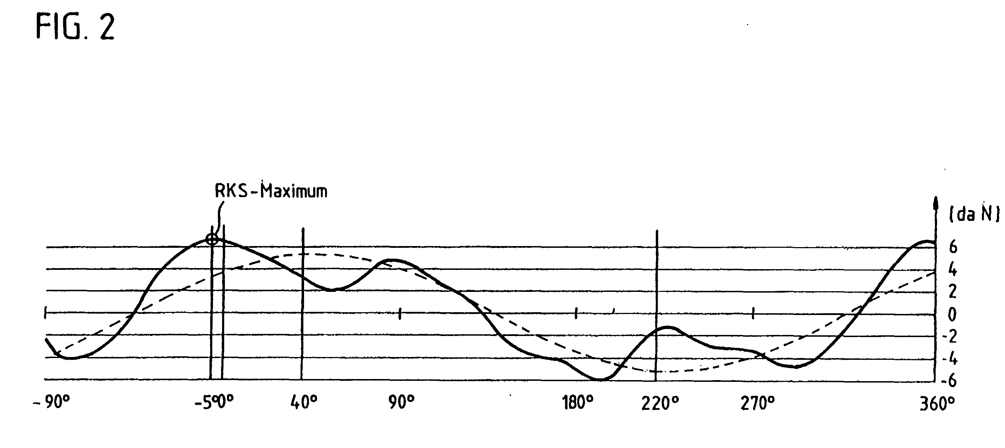

**Figur 2** zeigt in durchgezogener Linie einen solchen RKS-Schrieb zum Reifen 1 gemäß Figur 1. Ihr Maximum liegt bei -5° und beträgt etwa 6,6 daN (jeder waagerechte Skalenstrich steht für 2 daN). In gestrichelter Linie ist die zugehörige erste Harmonische eingezeichnet. Ihr Maximum liegt etwa bei 40° und beträgt etwa 5,4 daN. Ihr Minimum liegt also bei 220° und - 5,4 daN.

Nach harmonischer Analyse des RKS-Schriebes wird für jeden individuellen Reifen oder für Kollektive von Reifen entschieden, ob und ggf. welcher wulstumformenden Nachbehandlung sie unterzogen werden. Vernachlässigbare Fehler werden gar nicht behandelt, bei Reifen mit kleinen Fehler sollte (sofern, wie üblich, sich die Qualitätsanforderung nur auf die erste Harmonische bezieht) nur entweder das Minimum oder das Maximum der ersten Harmonischen behandelt werden, bei Reifen mit mittleren Fehlern beide Extrema der ersten Harmonischen. Reifen mit größeren Fehlern sind durch andere Maßnahmen zu vermeiden.

Für den in unseren Werken besonders häufigen Fall kleinerer Fehler, für den eine Wahlmöglichkeit zwischen einer Maximums-Verkleinerung und einer Minimums-Vergrößerung besteht, empfiehlt es sich, die sogenannte Wulstkennung zu überprüfen, also die Stärke der Wulstpressung auf einer Norm-Messfelge. Liegt die Pressung höher als die mittlere im genormten Intervall, so sollten RKS-Maxima verkleinert werden, liegt die Pressung hingegen niedriger als die mittlere im genormten Intervall, so sollten RKS-Minima vergrößert werden.

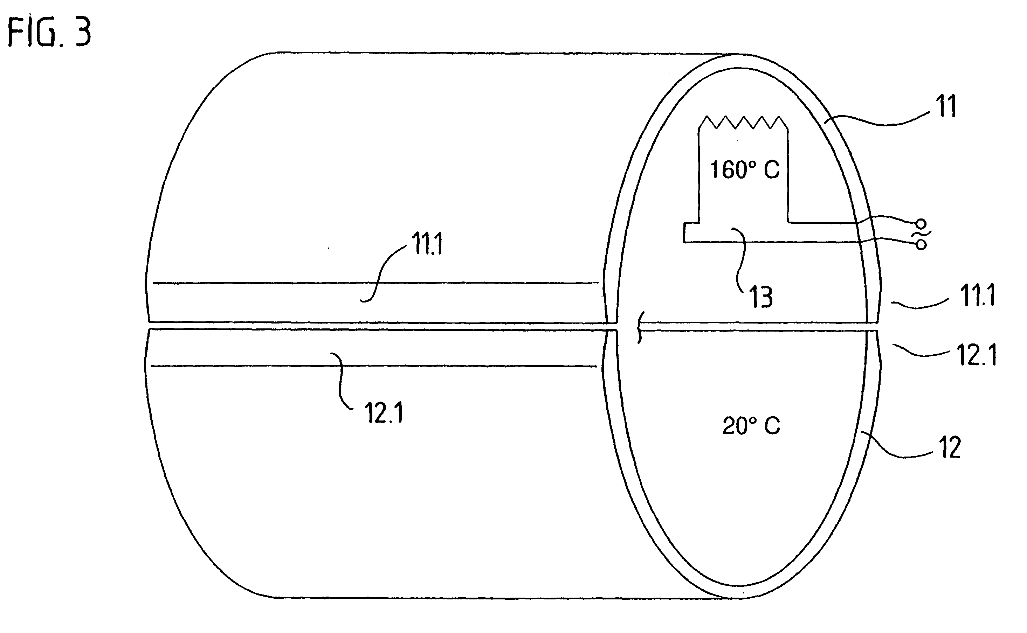

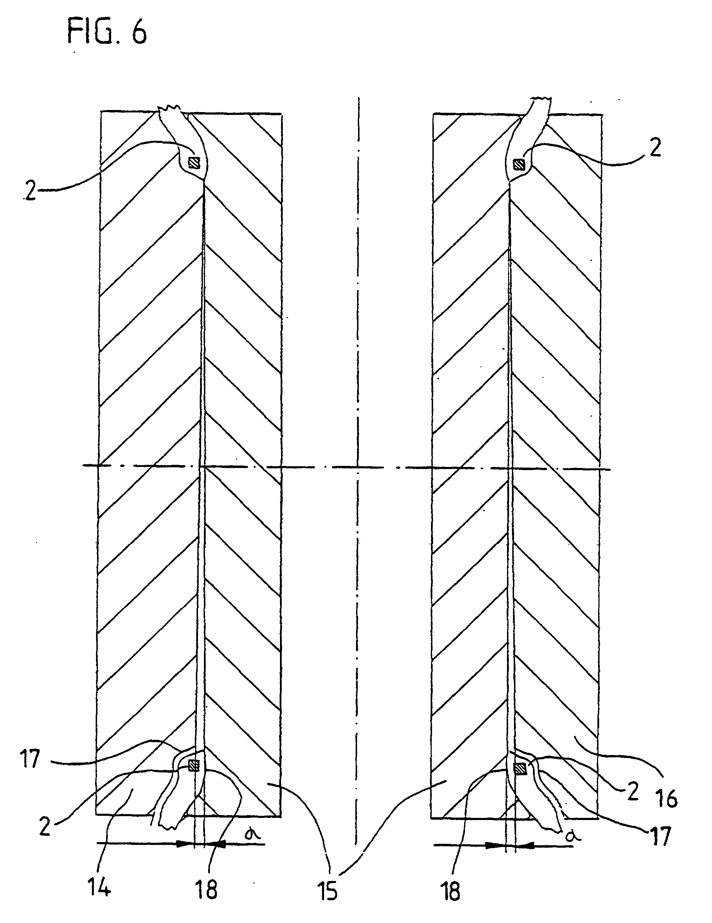

**Figur 3** zeigt schematisch eine Vorrichtung, die zur Reduktion der Maxima der ersten Harmonischen und - in leichter Abwandlung - auch der zweiten Harmonischen verwendbar ist und zwar jeweils mittels radialen Kraftangriffes; die späteren Figuren 6, 7 und 8 werden die Behandlungsmöglichkeit der Minima zeigen.

Die trommelförmige Vorrichtung weist ein oben gezeigtes Segment 11 und ein unten gezeigtes Segment 12 auf. In der gezeigten Stellung sind beide Segmente nahezu zusammen gefahren. Das obere Segment 11 weist in der Mitte seiner Bogenlänge eine elektrische Widerstandsheizung 13 auf, die mittels Thermostat auf 160°C geregelt ist. Das untere Segment 12 weist eine Temperatur von ca. 20°C auf.

Falls in einer Fertigungsstraße aus Platzmangel die Reifen in rascher Folge schon kurz nach der Vulkanisation behandelt werden müssen, empfiehlt sich zur Aufrechterhaltung einer solchen Temperatur eine Kühlmöglichkeit des unteren Segmentes.

Getreu der allgemein gültigen Lehre, dass Heizen billiger ist als Kühlen, wird zumindest zur Bekämpfung der ersten Harmonischen die Vulkanisationswärme vorzugsweise nicht ausgenutzt, man lässt also die Reifen sich in Ruhe abkühlen bis ihre Peripherie etwa 30°C bei PKW und etwa 25°C bei LKW-Reifen erreicht hat. Dann zieht man die Reifen auf die Vorrichtung gemäß Figur 3 und kommt mit der simplen Konvektionskühlung der unteren Schale - insbesondere erreicht in deren Leerstandszeiten - aus, verzichtet also auf eine Zwangskühlung mittels Kühlschlangen und Kompressor oder dergleichen.

Wird - wie in dieser Figur gezeigt - nur eines der beiden Segmente geheizt, so wird auch auf diesem einen eine Wulstverformung erzielt. Auf dem ungeheizten Segment erfährt der Reifenwulst zwar die gleiche Pressung, solange aber nicht die erhöhte Temperatur hinzutritt, führt dies praktisch zu keiner bleibenden Verformung.

Die hier gezeigte Vorrichtung ist nur zur Behandlung der ersten Harmonischen geeignet; mit Einbau einer weiteren elektrischen Heizung, nämlich auch in dem unten gezeigten Segment 12, würde sie zur Behandlung der zweiten Harmonischen geeignet. Würden nun beide Segmente 11, 12 gespreizt, so würde in der Mitte beider Segmente 11, 12 wegen ausreichender Presskraft und Hitze eine plastische Wulstverformung erzielt. 90° und 270° phasenversetzt dazu wird praktisch keine Verformung erreicht, weil dort die Segment-Temperatur kaum erhöht ist und zudem kaum Pressung besteht.

Wenn die beiden Heizungen separat schaltbar ausgeführt sind, so ist die Vorrichtung je nach Bedarf sowohl zur Bekämpfung der ersten Harmonischen (zwecks derer genau ein Segment beheizt wird) als auch zur Bekämpfung der zweiten Harmonischen (zwecks derer beide Segmente insbesondere in ihrem Mittenbereich beheizt werden) geeignet.

Soll sowohl die Amplitude der ersten wie auch der zweiten Harmonischen verringert werden und soll dieses in einer Kollektivbehandlung erfolgen, also ohne RKS-Messung eines jeden Reifenindividuums (zu vermessende und dafür zu belastende Reifen müssen kühl sein), so erfolgt dies bevorzugt in der Reihenfolge, dass zuerst die Amplitude der zweiten Harmonischen und dann erst die der ersten Harmonischen reduziert wird. Zwar sind es Techniker gewöhnt, das Wichtigste zuerst zu tun - hier die Reduktion der ersten Harmonischen - aber mit der soeben empfohlenen inversen Reihenfolge ergeben sich verringerte Kosten, insbesondere für Heizenergie, wie im Folgenden erläutert:

Die Reifen werden rasch nach ihrer Vulkanisation, also im noch heißen Zustande, auf die Vorrichtung gemäß Figur 3 gebracht. Die elektrische Leistungsaufnahme der Heizungen beider Schalen 10 und 11 ist dann gegenüber einer Aufheizung von 20°C aus erheblich verringert, braucht also nur evt. entstehende Temperaturabweichungen durch unterschiedlich lange Verweilzeiten nach Vollendung der Vulkanisation auszugleichen. Danach lässt man die Reifen in Ruhe abkühlen, um vom kalten Reifen ausgehend die erste Harmonische zu behandeln.

Wo hingegen - z. B. durch einen kühlen beanspruchbaren Wasserstrom - ausnahmsweise eine Kühlung billiger zu haben ist als eine Aufheizung, können auch ungerade Harmonische, insbesondere die erste, durch gezielte Kühlung des Segmentes, welches nicht verformen soll, reduziert werden anstelle einer gezielten Heizung des Segmentes, welches verformen soll.

Um Verletzungen der radial inneren Wulstflächen der zu behandelnden Reifen zu vermeiden, weist das Segment 11 an seinen beiden Mantelrändern Abflachungen 11.1 auf; analoge Abflachungen 12.1 hat zum selben Zwecke auch das unbeheizte Segment 12.

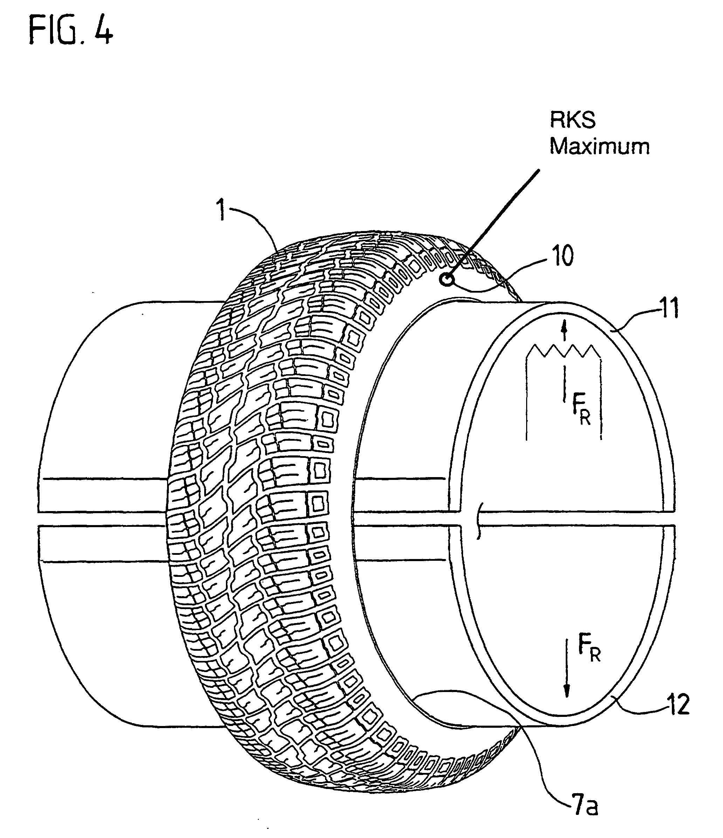

**Figur 4** zeigt die Vorrichtung nach Figur 3 in Aktion: Dazu ist der Fahrzeugluftreifen 1 aus Figur 1 auf die Vorrichtung aufgezogen. Zur Reduktion der ersten Harmonischen der RKS ist der Reifen so gedreht, dass sein mit der Marke 10 zuvor markiertes RKS-Maximum genau in der Mitte des beheizten Segmentes 11 der Vorrichtung zu liegen kommt. Danach wurden die beiden Segmente 11 und 12 dosiert radial auseinander gefahren mit einer spreizenden, radialen Kraft Fr; in dieser auseinandergefahrenen Stellung sind sie hier gezeigt.

So wirkt insbesondere im Zenith der beiden Segmente 11 und 12 eine hohe Pressung auf die sich im wesentlichen axial erstreckenden Wulstsitzflächen 7a.

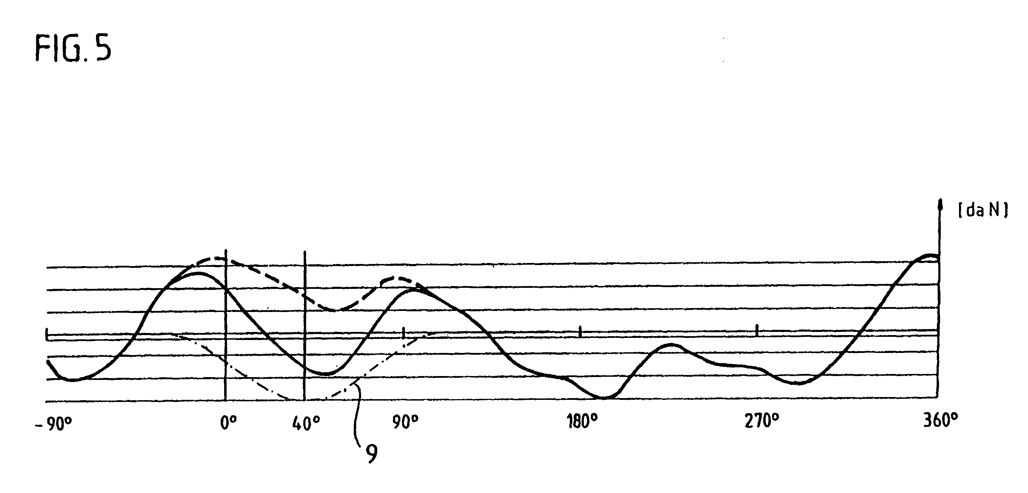

**Figur 5** zeigt - zum Vergleich mit Figur 2 - den nun erreichten RKS-Schrieb: In dem Bereich um 40° herum ist die Amplitude des RKS-Schriebes abgesenkt und zwar

bei -20° und bei 100° um etwa 0,3 daN,
bei -10° und bei 90° um etwa 1,1 daN,
bei 0° und bei 80° um etwa 2,3 daN,
bei 10° und bei 70° um etwa 3,7 daN,
bei 20° und bei 60° um etwa 4,9 daN,
bei 30° und bei 50° um etwa 5,7 daN und
bei 40° um etwa 6,0 daN.

Das Maximum der Absenkung 9 liegt also der Phase nach beim Maximum der ersten (unbehandelten) Harmonischen also 40°. Auch dem Betrage nach liegt das Maximum der Absenkung beim Maximum der ersten (unbehandelten) Harmonischen, vorzugsweise etwas größer, hier etwa 6,0 daN.

Zwecks leichteren Vergleiches mit der Figur 2, die den Ausgangszustand gezeigt hat, ist die dick durchgezogene Abszissen-Achse so gelegt, dass außerhalb des Behandlungsbereiches, also von 100° bis 340°, Deckungsgleichheit zwischen der Figur 2 und der Figur 5 besteht, wenn die hier dick durchgezogene Abszissenachse mit der Abszissenachse aus Figur 2 zur Deckung gebracht wird.

Weil aber natürlich die mittlere Radlast unverändert bleibt, das Integral der Radialkraftschwankung über einer Periodenlänge also definitionsgemäß genau 0 sein muss, liegt die tatsächlich gültige Abszissenachse etwas tiefer und zwar um das Integral der zwei Absätze zuvor angegebenen Absenkungsfunktion über dphi geteilt durch 360°.

Würde die Vorrichtung auch zur Verringerung der Amplitude der zweiten Harmonischen eingesetzt werden sollen, so müsste als erstes die Amplitude und Phasenlage dieser zweiten Harmonischen detektiert werden müssen, dementsprechend der zu behandelnde Reifen in die richtige Winkelstellung gegenüber der Vorrichtung gedreht werden müssen und dann diese Behandlung durchgeführt werden müssen. Bei der Behandlung der zweiten Harmonischen, wo ja im Zenith beider Vorrichtungssegmente eine erfindungsgemäße plastische Verformung der Wülste erreicht werden soll, müssen beide Segmente heiß sein. Dabei kann es sich empfehlen, durch eine andere - räumlich schärfer auf den jeweiligen Zenith konzentrierte - Heizwendel die Wärmeeinwirkung stärker auf den Zenith zu konzentrieren.

**Figur 6** zeigt schematisch eine Vorrichtung, die zur Anhebung von Minima des RKS-Schriebes dient mittels axialen Kraftangriffes. Sie weist zwei axial äußere Schalen 14 und 16 auf, die jeweils an ihren einander zugewandten, also axial inneren Seiten eine nach axial innen hin offene Rinne 17 haben, deren Querschnittgestalt gleich dem Negativum der Wulstkontur an seiner radial inneren und axial äußeren Seite ist.

Zwischen den beiden äußeren Schalen 14 und 16 ist jeweils eine mittlere Schale 15 angeordnet. Diese weist an ihren beiden axial äußeren Rändern jeweils eine Rinne 18 geringer Tiefe auf. Mit dieser Rinnenfläche wird die jeweilige axial innere Seitenfläche der Wülste 2 des zu behandelnden Reifens angegriffen.

Zur erfindungsgemäßen plastischen Wulstumformung werden nun die beiden äußeren Schalen 14 und 16 zusammengefahren. Zweckmäßigerweise sind sie dabei in einem kleinen Winkelbereich durch ein Kugelgelenk oder eine kardanische Aufhängung in ihrer Winkelstellung frei einstellbar. In einem ersten Schritt werden diese äußeren Schalen 14 und 16 nur soweit zusammengefahren, dass - unter Vermittlung des linken eingeklemmten Wulstes 2, der mittleren Schale 15 (die starr stehen kann) und des rechten Wulstes 2 - eine Presskraft entsteht, die mindestens so groß ist, dass die auf Haftreibung beruhenden Losbrechmomente der gelenkigen Lagerung überwunden werden, aber im Verhältnis zur Temperatur klein genug ist, um noch keine plastische Wulstumformung zu erzeugen. Die hierbei sich einstellende Winkelstellung der der äußeren Platten 14 und 16 zur mittleren Platte 15 wird gespeichert.

Dieser genannte erste Schritt mit geringer Kraft dient der Kalibrierung des Nullwertes der nachfolgend einzustellenden Plattenneigung. Wenn in einer - insbesondere automatisch gesteuerten - Reifenaufbaumaschine die Überlappungsstellen immer an der gleichen Stelle liegen und die Überlappungsbreiten von Reifen zu Reifen immer gleich sind, dann reicht es auch aus, wenn dieser erste, kalibrierende Schritt nur für den ersten und danach nur noch stichprobenartig immer wieder ausgeführt wird.

Ausgehend von der wie auch immer im Einzelfall gewonnenen Neutralstellung der wie Pressbacken wirkenden äußeren Schalen 14 und 16 werden diese dann dekliniert.

Dabei meint "Deklination" eine solche Schrägstellung der äußeren Schalen 14 und 16 um einen Winkel Alpha, dass in den näher an die mittlere Schale herangeführten Bereichen - die dort liegen, wo vor der Behandlung ein Radialkraftminimum lag - der Wulst so stark axial gepresst wird im Verhältnis zur Wulsttemperatur, dass eine plastische Verformung eintritt. Der so örtlich weggestauchte Gummi gelangt überwiegend an die radial innere Seite des Wulstes und vergrößert dort - nach Montage auf eine Felge - den Abstand zwischen dem Wulstkern und der etwa axial verlaufenden Reifensitzfläche auf der Felge. Dadurch gelangt an solchem Orte auch die über die Karkassfäden angebundene Lauffläche auf einen größeren Radius, was eine örtlich vergrößerte Radialkraft, also ein verringertes Radialkraftminimum bewirkt.

Dabei ist es sowohl möglich, die äußeren Platten unter Last zu deklinieren als auch, sie zunächst ohne Last zu deklinieren, im Deklinationswinkel gegenüber einem axial geführten Presskolben zu arretieren und dann über den axial nach innen fahrenden Presskolben unter Last zu setzen.

Wie schon im allgemeinen Teil der Beschreibung dargelegt, ist alternativ oder ergänzend zur Deklination auch eine örtliche Konzentration der Wärme auf die umzuformenden Bereiche möglich; dies bedingt jedoch solange, wie durch Pausen, Zulieferzeiten und ähnliches Schwankungen in der zeitlichen Abfolge entstehen, etwas kleinere Reproduziergenauigkeiten.

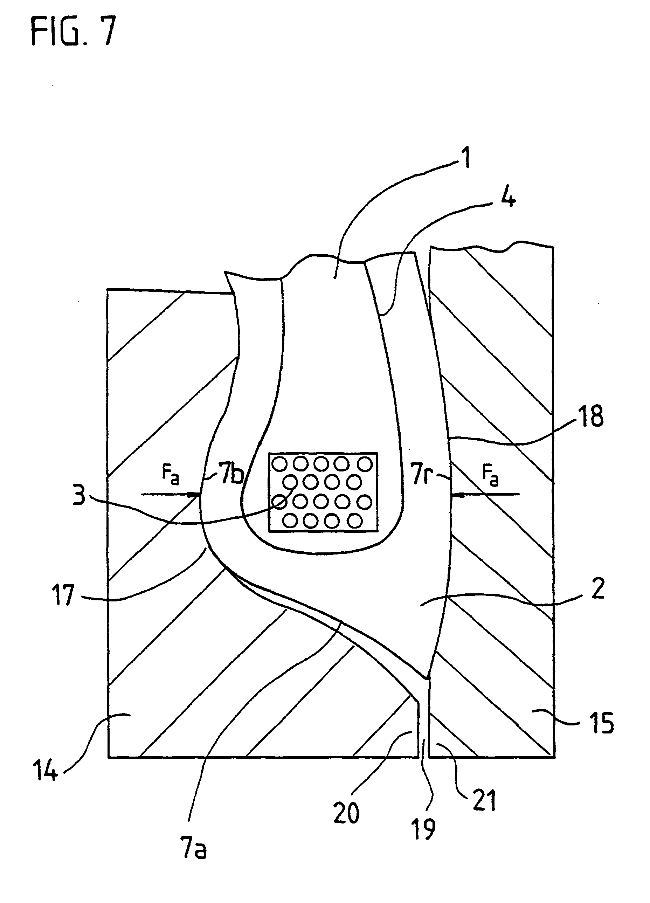

**Figur 7** zeigt in einem vergrößerten Ausschnitt aus Figur 6 einen (nämlich den linken) Wulst 2 des zu behandelnden Reifens 1 mit einem darin eingebetteten Pierce-Wulstkern 3, an dem durch Umschlingung eine radiale Karkasse 4 verankert ist. Für die erfindungsgemäße plastische Umformung dieses Wulstes 2 stehen die linke Schale 14 mit ihrer Rinne 17 und die mittlere Schale 15 mit ihrer Rinne 18 bereit.

Die beiden hier nur ausschnittsweise zu sehenden Schalen 14 und 15 sind gerade so weit zusammengefahren, dass sie axial außen den Wulst 2 zwischen der Rinne 18 der Schale 15 und der radial äußeren Zone der Rinne 17 der Schale 14 mit leichter Pressung durch eine Axialkraft Fa halten. Die radial innere Sitzfläche 7a des Wulstes 2 berührt hingegen noch nicht die entsprechende Zone der Rinne 17 der linken Schale 14. Zwischen den Anschlagflächen 20 und 21 der Schalen 14 und 15 (und natürlich auch zwischen den hier nicht sichtbaren Schalen 15 und 16) verbleibt in dieser Anfangsphase ein Spalt 19.

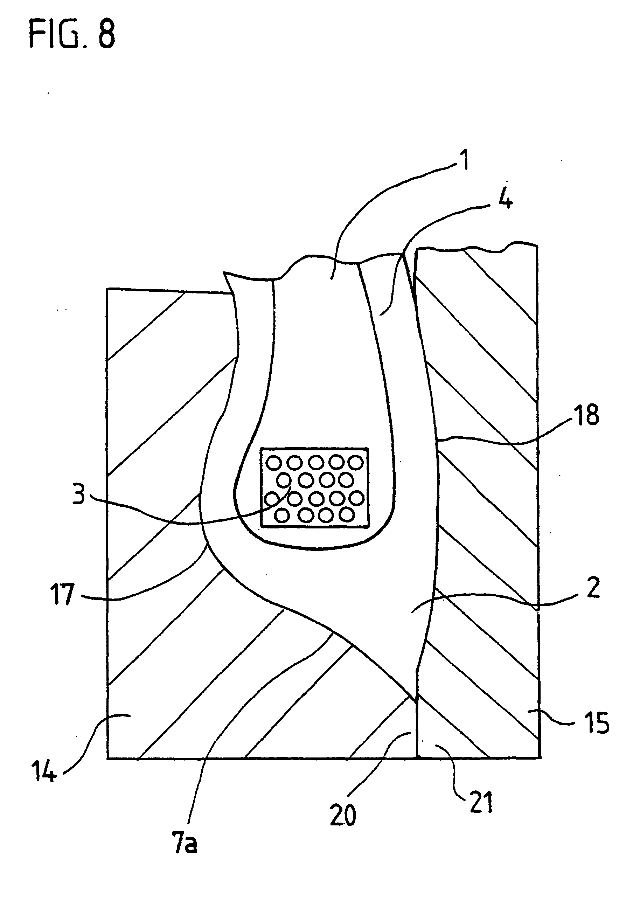

**Figur 8** zeigt analog Figur 7 den gleichen Reifenbereich, jedoch nach dem Zusammenfahren der beiden Schalen 14 und 15. Der maximal mögliche Verfahrweg der Schale 14 nach rechts gegen die Schale 15 ist begrenzt durch die Anschlagflächen 20 der linken Schale 14 und 21 der mittleren Schale 15. Hier ist die äußerst mögliche Verfahrung gezeigt, nach der die beiden Anschlagflächen 20 und 21 aufeinander aufliegen, der noch in Figur 7 ersichtliche Spalt 19 also verschwunden ist. Diese Darstellung soll aber nicht bedeuten, dass in jedem Falle der maximal mögliche Verfahrweg ausgenutzt werden müsse; vielmehr ist die Größe des örtlichen Verfahrweges an die Amplitude der zu verringernden ersten Harmonischen der Radialkraftschwankung (RKS) des zu behandelnden Wulstes 2 des Reifens 1 anzupassen.

Die Schalen 14 und 15 (und natürlich die hier nicht sichtbare Schale 16) sind insbesondere in dem Umfangsbereich, in dem der Reifen umgeformt werden soll, heiß. Die Schalen können auch örtlich gleichmäßig temperiert sein, sodass die örtliche Differenzierung zwischen keiner, geringer und größerer Wulstumformung allein durch die unterschiedlich große Presskraftverteilung erreicht wird.

Die unterschiedlich große Presskraft wird in dieser Vorrichtung, wie aus Figur 6 ersichtlich, durch die Schrägstellung der äußeren Schalen um einen Winkel Alpha erreicht; dabei braucht dieser Winkel Alpha zwischen linker Schale 14 und mittlerer Schale 15 nicht mit dem anderen Winkel Alpha zwischen der mittleren Schale 15 und der rechten Schale 16 übereinzustimmen. Vielmehr kann mit einer noch genaueren Differenzierung auch eine in einer linken und einer rechten Messspur verschieden große Radialkraftschwankung bekämpft werden, also eine über dem Umfang schwankende Konizität des Reifens 1. Es ist sogar in engen Grenzen möglich, eine über dem gesamten Umfang vorhandene Konizität zu verringern, wenn für die Verringerung der Radialkraftschwankung die Behandlung eines einzigen der beiden Wülste ausreichen würde.

Nach Verharren der umformenden Schalen 14 und 16 für eine gewisse Zeit - ca. 20 Minuten - in der in Figur 8 gezeigten zusammengefahrenen Stellung kann die Wulstbehandlung abgeschlossen werden; dazu werden die Schalen 14 und 16 wieder nach axial außen gefahren und der Reifen 1 entnommen.

Die gezeigten Ausführungsbeispiele sollen den Schutzumfang dieser Erfindung nicht beschränken. Sie dienen vielmehr nur der näheren Erläuterung. Die genannten Bemessungen sind in ersten Versuchen erprobt und bestätigt worden. Das Wesentliche der Erfindung ist, dass in einem Verfahren zur Wulstnachbehandlung zwecks Verbesserung der Reifengleichförmigkeit anstelle des vorbekannten, bereichsweisen Beschleifens der Wulstflächen ein bereichsweises plastisches Umformen des Wulstes tritt. Damit können nicht nur Radialkraft-Maxima verringert werden, wie mit dem Beschleifen, sondern auch Radialkraft-Minima angehoben werden.

Eine Bezugszeichenliste ist Bestandteil der Beschreibung.

**Bezugszeichenliste**

| | |
|---|---|
| 1 | Reifen |
| 2 | Wülste des Reifens 1 |
| 3 | Wulstkern |
| 4 | Karkasse |
| 5 | Seitenwände |
| 7 | Sitzfläche von 2 |

7a	radial innere, im wesentlichen axial verlaufende Sitzfläche eines jeden Wulstes 2 (kurz: Wulstsitzfläche)

7b	axial äußere, im wesentlichen radial verlaufende Fläche eines jeden Wulstes 2

7r	axial innere, im wesentlichen radial verlaufende Fläche eines jeden Wulstes 2

9	Absenkungsfunktion über dem Winkel (siehe in Fig. 5 strichpunktiert)

10	Markierungen = Marken von RKS-Extrema

11	oberes Segment einer radial wirkenden Wulstpressvorrichtung

11.1	Abflachung am Mantelrand von 11

12	unteres Segment einer radial wirkenden Wulstpressvorrichtung

12.1	Abflachung am Mantelrand von 12

13	elektrische Widerstandsheizung in Segment 11 und ggf. (zur Behandlung auch der zweiten Harmonischen) auch in Segment 12

14	linke axial äußere Schale der Vorrichtung nach den Figuren 6 und 7 zur axialen Wulstpressung

15	mittlere Schale der Vorrichtung nach den Figuren 6 und 7 zur axialen Wulstpressung

16	rechte axial äußere Schale der Vorrichtung nach den Figuren 6 und 7 zur axialen Wulstpressung

17	Rinne in axial äußeren Schalen 14 und 16 der Vorrichtung nach Fig. 6 zur Aufnahme der Wülste 2 des Reifens 1

18	Rinnen in axial mittlerer Schale 15 der Vorrichtung nach Fig. 6 zur Aufnahme der Wülste 2 des Reifens 1

19	Spalt zwischen den Anschlagflächen 20 und 21 in Fig. 7

20	Anschlagfläche an linker Schale 14

21	Anschlagfläche an mittlerer Schale 15

Fa	von axial innen nach axial außen gegen 7r und von axial außen nach axial innen gegen 7b drückende Kraft

Fr	von radial innen nach radial außen gegen 7a drückende Kraft

**Patentansprüche**

1.	Verfahren zur Verbesserung des Rundlaufes eines Fahrzeugluftreifens (1), wobei dessen Wulst (2) einer den Rundlauf verbessernden Nachbehandlung nach der Vulkanisation unterworfen wird, **dadurch gekennzeichnet, dass** während der Nachbehandlung der Wulst (2) zumindest bereichsweise plastisch umgeformt wird.

2.	Verfahren nach Anspruch 1, **dadurch gekennzeichnet, dass** während der Nachbehandlung kein Material entfernt wird.

3.	Verfahren nach den Ansprüchen 1 und 2, **dadurch gekennzeichnet,**

-	**dass** die bereichsweise Umformung des Wulstes (2) durch örtliche Einwirkung einer von radial innen nach radial außen drückenden Kraftkomponente (Fr) gegen die sich im wesentlichen axial erstrekkende Wulstsitzfläche (7a) und durch Einwirkung von Wärme erfolgt,

- wonach am Orte dieser Einwirkung der Wulstkern (3) des nachbehandelten Reifens (1) sich dichter an der sich im wesentlichen axial erstreckenden Wulstsitzfläche (7a) befindet als vor der Behandlung.

4. Verfahren nach den Ansprüchen 1 und 2, **dadurch gekennzeichnet,**

   - **dass** die bereichsweise Umformung des Wulstes (2) durch Einwirkung einer von radial innen nach radial außen drückenden Kraftkomponente (Fr) gegen die sich im wesentlichen axial erstreckende Wulstsitzfläche (7a) und durch örtliche Einwirkung von Wärme erfolgt,
   - wonach am Orte dieser Einwirkung der Wulstkern (3) des nachbehandelten Reifens (1) sich dichter an der sich im wesentlichen axial erstreckenden Wulstsitzfläche (7a) befindet als vor der Behandlung.

5. Verfahren nach Anspruch 3 oder 4, **dadurch gekennzeichnet,**

   - **dass** die nach radial außen drückende Kraftkomponente (Fr) zwischen 50 und 150 N pro mm Umfangslänge des Sektors der sich im wesentlichen axial erstreckenden Wulstsitzfläche (7a) beträgt, in dem die plastische Umformung des Wulstes (2) stattfinden soll, und
   - die Wärme zumindest im Bereich des Wulstes (2) zwischen 100°C und 230°C - vorzugsweise zwischen 160°C und 180°C - beträgt,
   - wobei die Dauer gemeinsamer Einwirkung von Kraft und Wärme zwischen 10 Minuten und 45 Minuten beträgt.

6. Verfahren nach den Ansprüchen 1 und 2, **dadurch gekennzeichnet,**

   - **dass** die bereichsweise Umformung des Wulstes (2) durch örtliche Einwirkung einer den zu behandelnden Wulst (2) axial zusammen drückenden Kraftkomponente (Fa) auf seine sich im wesentlichen radial erstrekkenden Flächen (7b, 7r) und durch Einwirkung von Wärme erfolgt,
   - wonach am Orte dieser Einwirkung der Wulstkern (3) des nachbehandelten Reifens (1) sich weiter entfernt von der sich im wesentlichen axial erstreckenden Wulstitzfläche (7a) befindet als vor der Behandlung.

7. Verfahren nach den Ansprüchen 1 und 2, **dadurch gekennzeichnet,**

   - **dass** die bereichsweise Umformung des Wulstes (2) durch Einwirkung einer den zu behandelnden Wulst (2) axial zusammen drückenden Kraftkomponente (Fa) auf seine sich im wesentlichen radial erstreckenden Flächen (7b, 7r) und durch örtliche Einwirkung von Wärme erfolgt,

   - wonach am Orte dieser Einwirkung der Wulstkern (3) des nachbehandelten Reifens (1) sich weiter entfernt von der sich im wesentlichen axial erstreckenden Wulstitzfläche (7a) befindet als vor der Behandlung.

8. Verfahren nach Anspruch 6 oder 7, **dadurch gekennzeichnet,**

   - **dass** die axial zusammen drückende Kraftkomponente (Fa) zwischen 50 und 150 N pro mm mittlere Umfangslänge des Sektors der sich im wesentlichen radial erstreckenden Wulstsitzfläche (7r) beträgt, in dem die plastische Umformung des Wulstes (2) stattfinden soll, und
   - die Wärme zumindest im Bereich des Wulstes (2) zwischen 100°C und 230°C - vorzugsweise zwischen 160°C und 180°C - beträgt,
   - wobei die Dauer gemeinsamer Einwirkung von Kraft und Wärme zwischen 10 .Minuten und 45 Minuten beträgt.

9. Verfahren nach Anspruch 3 oder 4, **dadurch gekennzeichnet,**

   - **dass** zunächst in an sich bekannter Weise die Stelle(n) ermittelt wird (werden), an der (denen) eine radiale Größe [R] des Reifens (1) - vorzugsweise seine Radialkraft - einen Schwellwert überschreitet,
   - **dass** danach zumindest an der Stelle, wo diese radiale Größe [R] des Reifens (1) den Schwellwert überschreitet und am größten ist, vorzugsweise an allen Stellen, wo die radiale Größe [R] einen Schwellwert überschreitend zu groß ist, die radiale Größe [R] des Reifens (1) verkleinert.wird,
   - und zwar dadurch dort verkleinert wird, dass dort der Wulstkern (3) dichter an die sich im wesentlichen axial erstreckende Wulstsitzfläche (7a) heran gebracht wird.

10. Verfahren nach Anspruch 6 oder 7, **dadurch gekennzeichnet,**

   - däss zunächst in an sich bekannter Weise die Stelle(n) ermittelt wird (werden), an der (denen) eine radiale Größe [R] des Reifens (1) - vorzugsweise seine Radialkraft, möglicherweise aber auch sein Laufflächen-Radius - einen Schwellwert unterschreitet,
   - dass danach zumindest an.der Stelle, wo diese radiale Größe [R] des Reifens (1) den Schwellwert unterschreitet und am kleinsten ist, vorzugsweise an allen Stellen, wo die radiale Größe [R] einen Schwellwert unterschreitend zu klein ist, die radiale Größe [R] des Reifens (1) vergrößert wird,

- und zwar dadurch vergrößert wird, dass dort der Wulstkern (3) weiter von der sich im wesentlichen axial erstreckenden Wulstsitzfläche (7a) weg gebracht wird.

11. Verfahren nach Anspruch 3 oder 4, **dadurch gekennzeichnet,**

- **dass** zunächst eine radiale Größe [R] des Reifens - vorzugsweise seine Radialkraft - über mindestens eine volle Radumdrehung als Funktion des Raddrehwinkels (phi) ermittelt wird,
- **dass** danach mittels einer Fourier-Analyse zumindest die erste - vorzugsweise die erste, zweite und dritte - Harmonische dieser Funktion ermittelt wird,
- **dass** danach zumindest im Bereich des Maximums der ersten Harmonischen -. vorzugsweise auch im Bereich des Maximums der zweiten und im Bereich des Maximums der dritten Harmonischen - diese radiale Größe [R] des Reifens (1) verkleinert wird,
- und zwar dadurch dort verkleinert wird, dass dort der Wulstkern (3) dichter an die sich im wesentlichen axial erstreckende Wulstsitzfläche (7a) heran gebracht wird.

12. Verfahren nach Anspruch 6 oder 7, **dadurch gekennzeichnet,**

- **dass** zunächst eine radiale Größe [R] des Reifens - vorzugsweise seine Radialkraft - über mindestens eine volle Radumdrehung als Funktion des Raddrehwinkels (phi) ermittelt wird,
- **dass** danach mittels einer Fourier-Analyse zumindest die erste - vorzugsweise die erste, zweite und dritte - Harmonische dieser Funktion ermittelt wird,
- **dass** danach zumindest im Bereich des Minimums der ersten Harmonischen - vorzugsweise auch im Bereich des Minimums der zweiten und im Bereich des Minimums der dritten Harmonischen - diese radiale Größe [R] des Reifens (1) vergrößert wird,
- und zwar dadurch dort vergrößert wird, dass dort der Wulstkern (3) weiter von der sich im wesentlichen axial erstreckenden Wulstsitzfläche (7a) weg gebracht wird.

13. Verfahren nach den Ansprüchen 9 und 10 oder nach den Ansprüchen 11 und 12, **dadurch gekenn-**

zeichnet, dass sowohl das Maximum der radialen Größe [R] bzw. das Maximum der ersten Harmonischen der radialen Größe [R] verkleinert als auch das Minimum der radialen Größe [R] bzw. das Minimum der ersten Harmonischen der radialen Größe [R] vergrößert wird.

14. Verfahren nach einem der Ansprüche 9 bis 13 und Anspruch 5 bzw. 8, wobei als radiale Größe [R] die Radialkraft [$R_f$] mit ihrer Schwankung [$\partial R_f$ oder - gleichbedeutend - RKS] erfasst ist, **dadurch gekennzeichnet,**

- **dass** zunächst die Orientierung und Höhe der zweckmäßigen Radialkraftänderung $\partial R$ - vorzugsweise nach einem der Ansprüche 7 bis 11 - ermittelt wird,
- danach in Abhängigkeit von der vorgesehenen Umformtemperatur T die erforderliche Einwirkungszeit t nach folgender Formel ermittelt wird,

$$t = c \, \frac{\partial R}{(T-T_o)^2}$$

wobei c eine von der Gummizusammensetzung abhängige Konstante und $T_o$ die Glasübergangstemperatur der im Wulstbereich verwendeten Gummimischung, wobei für die Gummizusammensetzungen, die im Reifenwulstbereich üblich sind, die Konstante c zwischen 1,0 und 2,8 x $10^{-7}$ mm$^2$/K$^2$s, für die meisten PKW-Reifen zwischen 1,6 und 1,8 x $10^{-7}$ mm$^2$/K$^2$s liegt,

- und danach die so bemessene Druck- und Wärmebehandlung des Reifenwulstes (2) durchgeführt wird.

15. Verfahren nach Anspruch 14, **dadurch gekennzeichnet,**

a) dass bei der Konfektion aller Reifenrohlinge einer Charge die erforderlichen Fügestellen in jeweils gleicher Phasenlage angeordnet werden und

b) dass alle Reifenrohlinge dieser Charge in einer bestimmten Phasenlage in die gleiche - vorzugsweise in die selbe - Vulkanisationsform gegeben und vulkanisiert werden,

c) dass danach ein repräsentatives Kollektiv von n Reifen - wobei n vorzugsweise gleich 8 - aus dieser Charge herausgegriffen wird

d) und alle Reifen dieses Kollektives abgekühlt werden - vorzugsweise unter 75° C -,

e) wonach jeder Reifen dieses Kollektives auf eine Messfelge aufgezogen wird und für jeden Reifen dieses Kollektives eine radiale Größe

[$R_\mu$] - vorzugsweise die Radialkraft - über dem Drehwinkel (phi) gemessen wird, wobei $\mu$ von 1 bis n laufen soll,

f) wonach diese individuell ermittelten Funktionsverläufe der radialen Größe $R_\mu = f_\mu$(phi) phasengerecht und linear gemittelt werden zu einer mittleren radialen Größe

$$R_m = f_m(phi) = 1/n \times [R_1 + R_2 + ... + R_{(n-1)} + R_n],$$

g) wonach in Abhängigkeit von der so bestimmten mittleren radialen Größe $R_m$(phi) die plastische Wulstumformung - im bevorzugten Falle gemäß Anspruch 14 - ermittelt wird und danach die so bestimmte plastische Wulstumformung an allen n Reifen dieses Kollektives durchgeführt wird,

h) dass danach jeder Reifen dieses Kollektives erneut abgekült wird - vorzugsweise unter 75°C -, erneut auf eine Messfelge aufgezogen wird und für jeden Reifen dieses Kollektives erneut die radiale Größe [R] über dem Drehwinkel (phi) gemessen und mit vorgegebenen Toleranzfeldern verglichen wird und

i) im Falle der Einhaltung vorgegebener Toleranzfelder alle restlichen Reifen dieser Charge in gleicher Weise den Wulst (2) bereichsweise plastisch umformend behandelt werden.

16. Verfahren nach Anspruch 15, **dadurch gekennzeichnet,**

- **dass** im Falle der Nichteinhaltung der vorgegebenen Toleranzfelder gemäß Merkmal h) des Anspruches 15 ein weiteres repräsentatives Kollektiv aus dieser Charge entnommen wird,
- wobei besagtes weiteres Kollektiv keine Reifen aus dem ersten Kollektiv enthält,
- wonach besagtes weitere Kollektiv entsprechend den Merkmalen d) bis h) des vorherigen Anspruches behandelt wird,
- wonach im Falle der Einhaltung vorgegebener Toleranzfelder alle restlichen Reifen dieser Charge in gleicher Weise den Wulst (2) bereichsweise plastisch umformend behandelt werden.

17. Verfahren nach einem der vorangehenden Ansprüche, **dadurch gekennzeichnet, dass** eine radiale Größe R(phi)

- vorzugsweise die Radialkraft - in zwei Spuren Rr(phi) und Rl(phi), nämlich eine rechts und eine links der Reifenmitte, gemessen wird und bei Abweichungen zwischen Rr und Rl beide Wülste (2) des Reifens (1) voneinander verschieden

- vorzugsweise gleichzeitig - plastisch umgeformt werden, wobei der oder die Bogenlängenbereich(e), in dem bzw. in denen der eine Wulst plastisch umgeformt wird, von dem bzw. von den Bogenlängenbereich(en), in dem der andere Wulst plastisch umgeformt wird, abweichen kann.

18. Verfahren nach zumindest einem der Ansprüche 3 oder 4 oder 6 oder 7, und zudem vorzugsweise nach Anspruch 15, **dadurch gekennzeichnet, dass** - im Falle des Anspruches 15 abgesehen von den Reifen des bzw. der repräsentativen Kollektive (s) - die Reifen einer Charge

- durch hinreichend kurzen zeitlichen Abstand zwischen der Entnahme aus der Vulkanisationsform und Durchführung der zumindest bereichsweisen plastischen Wulstumformung und/oder
- durch wärmeisolierende, zumindest die Reifenwülste umhüllende Mittel
- die Abkühlung der Reifen so weit gebremst wird, dass die Reifen zumindest im Wulstbereich beim Aufziehen auf die die Wulstumformung bewirkende Vorrichtung ohne Zufuhr von Wärmeenergie in den Reifenwulst noch eine Temperatur zwischen 100°C und 230°C, vorzugsweise zwischen 160°C und 180°C aufweisen.

19. Verfahren nach Anspruch 18 und nach zumindest einem der Ansprüche 4 oder 7, **dadurch gekennzeichnet, dass** die Örtlichkeit der Einwirkung von Wärme dadurch erzielt wird, dass vor Aufbringung der umformenden Kraft die Bereiche des Wulstes (2), die im wesentlichen unverformt bleiben sollen, gekühlt werden, vorzugsweise auf eine Temperatur unter 75°C.

20. Verfahren nach den Ansprüchen 1 und 2, **dadurch gekennzeichnet, dass** die Materialverteilung im Kernbereich durch gleichmäßiges Aufweiten des Reifenwulstes, zum Beispiel durch Aufdrücken auf eine konische Kalibrierfelge, oder durch gleichmäßiges axiales Zusammenstauchen, jeweils bei einer Wulsttemperatur zwischen 100°C und 230°C, vergleichmäßigt wird.

21. Vorrichtung zur Durchführung eines Verfahrens gemäß Anspruch 20 mit gleichmäßiger radialer Wulstaufweitung, die eine Trommel umfasst, die nicht in mechanisch zueinander bewegliche Segmente unterteilt ist, **dadurch gekennzeichnet, dass** die Trommel konisch ist - vorzugsweise mit einem Winkel ($\beta$) zwischen der Mantelfläche der Trommel und der Rotationssymmetrieachse etwa entsprechend der Neigung der radial inneren Wulstsitzfläche des zu bearbeitenden Reifens - und - bereichsweise oder insgesamt - beheizbar oder kühlbar oder wärmeisolierend ist, wobei die Vorrichtung weiterhin ein - vorzugsweise ringförmiges - Element aufweist, welches einen Reifenwulst axial aufzupressen vermag.

22. Vorrichtung zur Durchführung eines Verfahrens gemäß Anspruch 3 oder 4 mit ungleichmäßiger radialer Wulstaufweitung, wobei die Vorrichtung eine Trommel umfasst, die nicht in mechanisch zueinander bewegliche Segmente unterteilt ist, **dadurch gekennzeichnet,**

    - **dass** die Trommel konisch ist - vorzugsweise mit einem mittleren Winkel zwischen der Mantelfläche der Trommel und der Rotationssymmetrieachse etwa entsprechend der Neigung der radial inneren Wulstsitzfläche des zu bearbeitenden Reifens - ,
    - wobei die Trommel im Querschnitt unrund ist, also einen über dem Drehwinkel phi schwankenden Radius R aufweist, der der Formel

    $$R = R_m + c \sin(n \times phi)$$

    entspricht, wobei n die Ordnung der zu bekämpfenden Harmonischen ist,
    - wobei die Vorrichtung weiterhin ein - vorzugsweise ringförmiges - Element aufweist, welches einen Reifenwulst (2) axial aufzupressen vermag,
    - wobei die Trommel vorzugsweise - bereichsweise oder insgesamt - beheizbar oder kühlbar oder wärmeisolierend ist.

23. Vorrichtung zur Durchführung eines Verfahrens gemäß Anspruch 20 zur gleichmäßigen axialen Wulstpressung, die zumindest zwei ringförmige Schalen (14, 15, 16) umfasst, die nicht in mechanisch zueinander bewegliche Segmente unterteilt sind, **dadurch gekennzeichnet, dass** beide Schalen (14 und 15; 15 und 16) koaxial und konzentrisch zueinander geführt sind und einander zugewandte Oberflächen (17 und 18) aufweisen, die als Negativ zur axial inneren und axial äußeren Wulstkontur des zu bearbeitenden Reifens passen, und vorzugsweise - bereichsweise oder insgesamt - beheizbar oder kühlbar oder wärmeisolierend sind, wobei mindestens eine (14, 16) der beiden einen Wulst (2) bearbeitenden Schalen (14, 15, 16) gegenüber dem Fundament der Vorrichtung axial beweglich ist.

24. Vorrichtung zur Durchführung eines Verfahrens gemäß Anspruch 6 oder 7 mit ungleichmäßiger axialer Wulstpressung, wobei die Vorrichtung zumindest zwei Schalen (14, 15, 16) umfasst, die nicht in mechanisch zueinander bewegliche Segmente unterteilt sind, **dadurch gekennzeichnet, dass** beide Schalen (14 und 15; 15 und 16) einander zugewandte Oberflächen (17 und 18) aufweisen, die als Negativ zur axial inneren und axial äußeren Wulstkontur des zu bearbeitenden Reifens passen, wobei beide Schalen (14 und 15 bzw. 15 und 16) - bereichsweise oder insgesamt - beheizbar oder kühlbar oder wärmeisolierend sein können, wobei mindestens eine (14, 16) der beiden einen Wulst (2) bearbeitenden Schalen (14, 15, 16) gegenüber dem Fundament der Vorrichtung axial beweglich ist, wobei beide Schalen (14 und 15 bzw. 15 und 16) zwar konzentrisch zueinander geführt sind, jedoch so gegeneinander desaxierbar sind, dass der axiale Abstand zwischen beiden Schalen über dem Umfange schwankt mit einer Umfangsstelle kleinsten Abstandes (amin) und einer gegenüberliegenden Umfangsstelle größten Abstandes (amax).

25. Trommel (10), die in mindestens 2, vorzugsweise 12 Segmente (11) gegliedert ist, von denen mindestens eines - vorzugsweise alle - radial beweglich ist bzw. sind, als Vorrichtung zur Durchführung eines Verfahrens gemäß Ansprüche 3 und/oder 4 **dadurch gekennzeichnet, dass** mehrere die radiale Bewegung des bzw. der Segmente(s) (11) bewirkenden Spreizmechanismen vorhanden sind die so stark bemessen sind, dass sie mindestens eine Radialkraft gleich dem Produkt 50 N/mm mal der Umfangslänge des betreffenden Segmentes schadensfrei aufzunehmen vermögen.

26. Trommel (10) nach Anspruch 25, **dadurch gekennzeichnet, dass** mindestens eines - vorzugsweise alle - ihrer Segmente (11) so beheizbar ist bzw. sind, dass dessen bzw. deren Segmentfläche(n) (12), die zur Berührung und plastisch verformenden Pressung auf die sich im wesentlichen axial erstreckende Wulstsitzfläche (7a) vorgesehen ist bzw. sind, eine Temperatur zwischen 100°C und 230°C - vorzugsweise zwischen 160°C und 180°C - erreichen kann bzw. können.

27. Trommel (10) nach Anspruch 25, **dadurch gekennzeichnet, dass** mindestens eines - vorzugsweise alle - ihrer Segmente (11) so kühlbar ist bzw. sind, dass dessen bzw. deren Segmentfläche(n) (12), die zur Berührung und plastisch verformenden Pressung auf die sich im wesentlichen axial erstreckende Wulstsitzfläche (7a) vorgesehen ist bzw. sind, eine Temperatur unter 100°C - vorzugsweise unter 75°C - erreichen kann bzw. können.

28. Trommel (10) nach zumindest einem der Ansprüche 25 bis 27, **dadurch gekennzeichnet, dass** die Segmente (11) in radialer Richtung unterschiedlich weit herausfahrbar sind.

29. Vorrichtung zur Durchführung eines Verfahrens gemäß Anspruch 6 oder 7, **dadurch gekennzeichnet, dass** sie zur Erfassung eines Reifenwulstes (2) zwei Ringe aufweist, von denen zumindest einer in'zumindest zwei, vorzugsweise zwölf, Segmente gegliedert ist, wovon sich mindestens eines axial bewegen lässt.

30. Vorrichtung nach Anspruch 29, **dadurch gekennzeichnet, dass** sich einander axial gegenüberliegende Segmente beider Ringe axial gegeneinander bewegen lassen.

31. Vorrichtung nach Anspruch 29 oder 30, **dadurch gekennzeichnet, dass** mindestens eines - vorzugsweise alle - ihrer Segmente so beheizbar ist bzw. sind, dass dessen bzw. deren Segmentfläche (n), die zur Berührung und plastisch verformenden Pressung auf die sich im wesentlichen radial erstreckenden Flächen (7b, 7r) eines Wulstes (2) vorgesehen ist bzw. sind, eine Temperatur zwischen 100°C und 230°C - vorzugsweise zwischen 160°C und 180°C - erreichen kann bzw. können.

32. Vorrichtung nach zumindest einem der Ansprüche 29 bis 31, **dadurch gekennzeichnet, dass** mindestens eines - vorzugsweise alle - ihrer Segmente so kühlbar ist bzw. sind, dass dessen bzw. deren Segmentfläche(n), die zur Berührung und plastisch verformenden Pressung auf die sich im wesentlichen radial erstreckenden Flächen (7b, 7r) eines Wulstes (2) vorgesehen ist bzw. sind, eine Temperatur unter 100°C - vorzugsweise unter 75°C - erreichen kann bzw. können.

33. Trommel nach einem der Ansprüche 25 bis 28 oder Vorrichtung nach zumindest einem der Ansprüche 29 bis 32, **dadurch gekennzeichnet, dass** jedes ihrer Segmente durch voneinander unabhängige Kühlung und/oder Heizung auf verschiedene Temperaturen einstellbar ist.

34. Trommel nach einem der Ansprüche 25 bis 28 und/ oder Vorrichtung nach einem der Ansprüche 29 bis 33, **dadurch gekennzeichnet, dass** die gegeneinander beweglichen Segmente (11, 12) an ihren Fügestellen (11.1, 12.1) abgeflacht sind.

35. Verfahren nach einem der Ansprüche 1 bis 20, **dadurch gekennzeichnet, dass** der Wulst (2) während der plastisch umformenden Nachbehandlung zumindest bereichsweise in Vibration versetzt wird, vorzugsweise im Ultraschallbereich.

36. Vorrichtung nach einem der Ansprüche 21 bis 34 zur Durchführung eines Verfahrens nach Anspruch 35, **dadurch gekennzeichnet, dass** zumindest eines der den Wulst (2) während der plastischen Umformung berührenden Bauteile der Vorrichtung zu vibrieren vermag, oder den Wulstgummi vermittels eines Kraftangriffes auf den Wulstkern in Vibration zu setzen vermag, jeweils vorzugsweise im Ultraschallbereich.

**Claims**

1. Method for improving the concentricity of a pneumatic vehicle tyre (1), wherein its bead (2) is subjected, after vulcanisation, to post-treatment which improves the concentricity, **characterised in that** during the post-treatment, the bead (2) is plastically deformed at least in regions.

2. Method according to claim 1, **characterised in that** no material is removed during the post-treatment.

3. Method according to claims 1 and 2, **characterised in that** the partial deformation of the bead (2) takes place due to local action of a force component (Fr) which presses from radially inwards to radially outwards against the bead seat surface (7a) which extends substantially axially, and due to the action of heat,

   - after which at the location of this action, the bead core (3) of the post-treated tyre (1) is located closer to the bead seat surface (7a) which extends substantially axially than before the treatment.

4. Method according to claims 1 and 2, **characterised in that** the partial deformation of the bead (2) takes place due to the action of a force component (Fr), which presses from radially inwards to radially outwards against the bead seat surface (7a) which extends substantially axially, and due to the local action of heat,

   - after which at the location of this action, the bead core (3) of the post-treated tyre (1) is located closer to the bead seat surface (7a) which extends substantially axially than before the treatment.

5. Method according to claim 3 or 4, **characterised in that** the force component (Fr) which presses radially outwards is between 50 and 150 N per mm circumferential length of the sector of the bead seat surface (7a) which extends substantially axially, in which sector the plastic deformation of the bead (2) is intended to take place, and

   - the heat is between 100°C and 230°C - preferably between 160°C and 180°C - at least in the region of the bead (2),

- the duration of the common action of force and heat being between 10 minutes and 45 minutes.

6. Method according to claims 1 and 2, **characterised in that**

- the partial deformation of the bead (2) takes place due to the local action of a force component (Fa) which presses together axially the bead (2) to be treated onto its surfaces (7b, 7r) which extend essentially radially, and due to the action of heat,

- after which at the location of this action, the bead core (3) of the post-treated tyre (1) is located further removed from the bead seat surface (7a) which extends substantially axially than before the treatment.

7. Method according to claims 1 and 2, **characterised in that**

- the partial deformation of the bead (2) takes place due to the action of a force component (Fa) which presses together axially the bead (2) to be treated onto its surfaces (7b, 7r) which extend substantially radially, and due to the local action of heat,

- after which, at the location of this action, the bead core (3) of the post-treated tyre (1) is located further removed from the bead seat surface (7a) which extends substantially axially than before the treatment.

8. Method according to claim 6 or 7, **characterised in that**

- the force component (Fa), which presses together axially, is between 50 and 150 N per mm mean circumferential length of the sector of the bead seat surface (7r) which extends substantially radially, in which sector the plastic deformation of the bead (2) is intended to take place, and

- the heat is preferably between 100°C and 230°C - preferably between 160°C and 180°C - at least in the region of the bead (2),

- the duration of the common action of force and heat being between 10 minutes and 45 minutes.

9. Method according to claim 3 or 4, **characterised in that**

- initially, in a manner known per se, the location(s) is (are) determined at which a radial quantity [R] of the tyre (1) - preferably its radial force - exceeds a threshold value,

- **in that** thereafter, at least at the location where this radial quantity [R] of the tyre (1) exceeds the threshold value and is the greatest, preferably at all the locations where the radial quantity [R] exceeding a threshold value is too great, the radial quantity [R] of the tyre (1) is reduced,

- and is specifically reduced there **in that** the bead core (3) there is brought closer to the bead seat surface (7a) which extends substantially axially.

10. Method according to claim 6 or 7, **characterised in that**

- initially, in a manner known per se, the location(s) is (are) determined, at which a radial quantity [R] of the tyre (1) - preferably its radial force, but possibly also its tread radius - does not reach a threshold value,

- **in that** thereafter at least at the location where this radial quantity [R] of the tyre (1) does not reach the threshold value and is the smallest, preferably at all the locations where the radial quantity [R] not reaching a threshold value is too small, the radial quantity [R] of the tyre (1) is increased,

- and specifically is increased **in that** there the bead core (3) is brought further away from the bead seat surface (7a) which extends substantially axially.

11. Method according to claim 3 or 4, **characterised in that**

- initially a radial quantity [R] of the tyre - preferably its radial force - is determined over at least a full wheel revolution as a function of the angle of rotation of the wheel (phi),

- **in that** thereafter at least the first - preferably the first, second and third - harmonic of this function is determined by means of a Fourier analysis,

- **in that** thereafter at least in the region of the maximum of the first harmonic - preferably also in the region of the maximum of the second and in the region of the maximum of the third harmonic - this radial quantity [R] of the tyre (1) is reduced,

- and specifically is reduced there **in that** there the bead core (3) is brought closer to the bead seat surface (7a) which extends substantially axially.

12. Method according to claim 6 or 7, **characterised in that**

- initially a radial quantity [R] of the tyre - preferably its radial force - is determined over at least one full wheel revolution as a function of the angle of rotation of the wheel (phi),

- **in that** thereafter at least the first - preferably the first, second and third - harmonic of this function is determined by means of a Fourier analysis,

- **in that** thereafter at least in the region of the minimum of the first harmonic - preferably also in the region of the minimum of the second and in the region of the minimum of the third harmonic - this radial quantity [R] of the tyre (1) is increased,

- and specifically is increased there **in that** there the bead core (3) is brought further away from the bead seat surface (7a) which extends substantially axially.

13. Method according to claims 9 and 10 or according to claims 11 and 12, **characterised in that** both the maximum of the radial quantity [R] or respectively the maximum of the first harmonic of the radial quantity [R] is reduced and the minimum of the radial quantity [R] or respectively the minimum of the first harmonic of the radial quantity [R] is increased.

14. Method according to one of claims 9 to 13 and claim 5 or 8 respectively, wherein the radial force $[R_f]$ with its fluctuation $[\delta R_f$ or - the equivalent RKS] is detected as the radial quantity [R], **characterised in that**

- initially the orientation and height of the expedient radial force change $\delta R$ - preferably according to one of claims 7 to 11 - is determined,

- thereafter, the necessary action time t is determined in dependence on the deformation temperature T provided, according to the following formula:

$$t = c \, \frac{\partial R}{(T-T_o)^2}$$

where c is a constant dependent on the composition of the rubber and $T_o$ is the glass transition temperature of the rubber mixture used in the bead region, the constant c being between 1.0 and 2.8 x $10^{-7}$ $mm^2/K^2s$, for most car tyres between 1.6 and 1.8 x $10^{-7}$ $mm^2/K^2s$, for the rubber compositions which are usual in the tyre bead region,
and thereafter the pressure treatment and heat treatment thus measured of the tyre bead (2) is carried out.

15. Method according to claim 14, **characterised in that**

a) during the assembly of all the tyre blanks of one batch, the necessary joints are arranged in each case in the same phase position, and

b) **in that** all the tyre blanks of this batch in a specific phase position are put into the identical - preferably into the same - vulcanisation mould and vulcanised,

c) **in that** thereafter a representative collection of n tyres - n being preferably equal to 8 - is selected from this batch

d) and all the tyres of this collection are cooled - preferably below 75°C,

e) after which each tyre of this collection is drawn onto a measuring rim and for each tyre of this collection a radial quantity $[R_\mu]$ - preferably the radial force - is measured via the angle of rotation (phi), it being intended that $\mu$ should run from 1 to n,

f) after which these individually determined function patterns of the radial quantity $R_\mu = f_\mu$ (phi) are averaged correct to phase and in a linear manner to form a mean radial quantity

$$R_m = f_m \text{ (phi)} = 1/n \times [R_1 + R_2 + ... + R_{(n-1)} + R_n],$$

g) after which, in dependence on the mean radial quantity $R_m$ (phi) thus determined, the plastic bead deformation is determined - in the preferred case according to claim 14 - and thereafter the plastic bead deformation thus determined is carried out on all n tyres of this collection,

h) **in that** thereafter each tyre of this collection is cooled again - preferably below 75°C -, is drawn again onto a measuring rim and for each tyre of this collection the radial quantity [R] is measured again via the angle of rotation (phi) and compared with preset tolerance zones, and

i) in the case where preset tolerance zones are observed, all the remaining tyres of this batch are treated in the same manner, deforming the bead (2) plastically in regions.

16. Method according to claim 15, **characterised in that**

  - in the event of not observing the preset tolerance zones according to feature h) of claim 15, a further representative collection is taken from this batch,

  - said additional collection not containing any tyres from the first collection,

  - after which said additional collection is treated according to features d) to h) of the previous claim,

  - after which, in the case where the preset tolerance zones are observed, all the remaining tyres of this batch are treated in the same manner, plastically deforming the bead (2) in regions.

17. Method according to one of the preceding claims, **characterised in that** a radial quantity R(phi) - preferably the radial force - is measured in two tracks Rr(phi) and Rl(phi), namely one on the right of the centre of the tyre and one on the left of the centre of the tyre, and where there are deviations between Rr and Rl, both beads (2) of the tyre (1) are plastically deformed - preferably simultaneously - in a different manner from each other, the curved segment or segments in which the one bead is plastically deformed being able to differ from the curved segment or segments in which the other bead is plastically deformed.

18. Method according to at least one of claims 3 or 4 or 6 or 7, and additionally preferably according to claim 15, **characterised in that** - in the case of claim 15 apart from the tyres of the representative collection or collections - the tyres of a batch

  - by a sufficiently short lapse of time between the removal from the vulcanisation mould and carrying out the plastic bead deformation at least in regions and/or

  - by thermally insulating means, enveloping at least the tyre beads,

  - the cooling of the tyres is slowed down so far that the tyres at least in the bead region, when drawn onto the device causing the bead deformation, without any supply of thermal energy to the tyre bead, still have a temperature of between 100°C and 230°C, preferably between 160°C and 180°C.

19. Method according to claim 18 and according to at least one of claims 4 or 7, **characterised in that** the location of the action of heat is achieved **in that** before the deforming force is applied, the regions of the bead (2) which are intended to remain substantially undeformed, are cooled, preferably to a temperature below 75°C.

20. Method according to claims 1 and 2, **characterised in that** the material distribution in the core region is evened out by uniform widening of the tyre bead, for example by it being pressed onto a conical calibration rim, or by uniform axial compression, in each case at a bead temperature of between 100°C and 230°C.

21. Device for carrying out a method according to claim 20 with uniform radial bead widening, said device comprising a drum which is not divided into segments which are mechanically moveable relative to one another, **characterised in that** the drum is conical - preferably with an angle (β) between the outer peripheral surface of the drum and the axis of rotational symmetry roughly corresponding to the inclination of the radially inner bead seat surface of the tyre to be processed - and - in regions or all over - can be heated or cooled or is thermally insulating, the device having furthermore a - preferably annular - element, which is capable of pressing on a tyre bead axially.

22. Device for accomplishing a method according to claim 3 or 4 with uneven radial bead widening, the device comprising a drum which is not divided into segments which are mechanically moveable relative to one another, **characterised in that**

  - the drum is conical - preferably with a mean angle between the outer peripheral surface of the drum and the axis of rotational symmetry roughly corresponding to the inclination of the radial inner bead seat surface of the tyre to be processed,

  - the drum being non-circular in cross-section, i. e. having a radius R which fluctuates via the angle of rotation phi and corresponds to the for-

mula:

$$R = R_m + c \sin (n \times phi)$$

where n is the order of the harmonic to be abated,

- the device furthermore having a - preferably annular - element which is capable of pressing on a tyre bead (2) axially,

- the drum preferably being able to be heated or cooled or being thermally insulating - in regions or all over.

23. Device for accomplishing a method according to claim 20 for uniform axial bead pressing, which device comprises at least two annular shells (14, 15, 16) which are not divided into segments which are mechanically moveable relative to one another, **characterised in that** both shells (14 and 15; 15 and 16) are guided coaxially and concentrically with respect to one another and have facing surfaces (17 and 18) which fit as a negative the axially inner and axially outer bead contour of the tyre to be processed, and preferably - in regions or all over - can be heated or cooled or are thermally insulating, at least one (14, 16) of the two shells (14, 15, 16) which process a bead (2) being axially moveable relative to the base of the device.

24. Device for accomplishing a method according to claim 6 or 7 with uneven axial bead pressing, the device including at least two shells (14, 15, 16) which are divided into segments which are not mechanically moveable relative to one another, **characterised in that** both shells (14 and 15; 15 and 16) have facing surfaces (17 and 18), which fit as a negative the axially inner and axially outer bead contour of the tyre to be processed, both shells (14 and 15 or respectively 15 and 16) - in regions or all over - being able to be heated or cooled or being thermally insulating, at least one (14, 16) of the two shells (14, 15, 16) processing a bead (2) being axially moveable relative to the base of the device, both shells (14 and 15 or respectively 15 and 16) being admittedly guided concentrically with respect to one another but able to be moved axially relative to each other in such a way that the axial spacing between the two shells fluctuates over the circumference with one circumferential location having the smallest spacing (amin) and an opposite circumferential location having the greatest spacing (amax).

25. Drum (10) which is divided into at least two, preferably twelve segments (11) of which at least one - preferably all - is or are radially moveable, as a device for accomplishing a method according to claims 3 and/or 4, **characterised in that** a plurality of spreading mechanisms which cause the radial movement of the segment or segments (11) is present, these mechanisms being of such dimensions that they can absorb at least a radial force equal to the product 50 N/mm times the circumferential length of the relevant segment without any damage.

26. Drum (10) according to claim 25, **characterised in that** at least one - preferably all - of its segments (11) can be heated up in such a way that its or their segment surface(s) (12) which is or are provided to make contact and provide plastically deforming pressure on the bead seat surface (7a) which extends substantially axially, can reach a temperature of between 100°C and 230°C - preferably between 160°C and 180°C.

27. Drum (10) according to claim 25, **characterised in that** at least one - preferably all - of its segments (11) may be cooled in such a way that its or their segment surface(s) (12), which is or are provided to make contact and apply plastically deforming pressure on the bead seat surface (7a) which extends substantially axially, can reach a temperature of below 100°C - preferably below 75°C.

28. Drum (10) according to at least one of claims 25 to 27, **characterised in that** the segments (11) can be moved out to varying distances in a radial direction.

29. Device for accomplishing a method according to claim 6 or 7, **characterised in that** in order to detect a tyre bead (2) it has two rings, of which at least one is divided into at least two, preferably twelve, segments, of which at least one can be moved axially.

30. Device according to claim 29, **characterised in that** axially facing segments of the two rings can be moved axially against one another.

31. Device according to claim 29 or 30, **characterised in that** at least one - preferably all - of its segments can be so heated that its or their segment surface (s), which is or are provided to make contact and provide plastically deforming pressure on the surfaces (7b, 7r) of a bead (2) which extend substantially radially, can achieve a temperature of between 100°C and 230°C - preferably between 160°C and 180°C.

32. Device according to at least one of claims 29 to 31, **characterised in that** at least one - preferably all - of its segments can be so cooled that its or their segment surface(s), which is or are provided to make contact and provide plastically deforming pressure on the surfaces (7b, 7r) which extend substantially radially, of a bead (2), can reach a temperature below 100°C - preferably below 75°C.

33. Drum according to one of claims 25 to 28 or device according to at least one of claims 29 to 32, **characterised in that** each of its segments can be adjusted by cooling and/or heating to various temperatures independently of one another.

34. Drum according to one of claims 25 to 28 and/or device according to one of claims 29 to 33, **characterised in that** the segments (11, 12), which are moveable relative to one another, are flattened at their joints (11.1, 12.1).

35. Method according to one of claims 1 to 20, **characterised in that**, during the plastically deforming post-treatment, the bead (2) is made to vibrate at least in regions, preferably in the ultrasound range.

36. Device according to one of claims 21 to 34 for accomplishing a method according to claim 35, **characterised in that** at least one of the device components which is in contact with the bead (2) during the plastic deformation is capable of vibrating, or is capable of making the bead rubber vibrate by means of an application of force to the bead core, in each case preferably in the ultrasound range.

## Revendications

1. Procédé pour améliorer la concentricité d'un pneumatique de véhicule (1), où son talon (2) est soumis, après la vulcanisation, à un traitement ultérieur améliorant la concentricité, **caractérisé en ce que**, au cours du traitement ultérieur, le talon (2) est déformé plastiquement au moins par zones.

2. Procédé selon la revendication 1, **caractérisé en ce que**, au cours du traitement ultérieur, aucune matière n'est enlevée.

3. Procédé selon les revendications 1 et 2, **caractérisé**

   - **en ce que** la déformation - par zones - du talon (2) se produit sous l'effet localisé d'une composante de force (Fr) faisant pression, de l'intérieur dans le sens radial vers l'extérieur dans le sens radial, s'exerçant contre la surface d'assise (7a) du talon s'étendant pratiquement dans le sens axial et sous l'effet de la chaleur,
   - où ensuite, à l'emplacement de cet effet, la tringle (3) du pneumatique (1) traité ultérieurement se trouve sur la surface d'assise (7a) du talon s'étendant pratiquement dans le sens axial, en étant plus rapprochée qu'avant le traitement.

4. Procédé selon les revendications 1 et 2, **caractérisé**

   - **en ce que** la déformation - par zones - du talon (2) se produit sous l'effet d'une composante de force (Fr) faisant pression de l'intérieur dans le sens radial vers l'extérieur dans le sens radial, s'exerçant contre la surface d'assise (7a) s'étendant pratiquement de façon axiale, et sous l'effet localisé de la chaleur,
   - où ensuite, à l'emplacement de cet effet, la tringle (3) du pneumatique (1) traité ultérieurement se trouve sur la surface d'assise (7a) du talon s'étendant pratiquement dans le sens axial, en étant plus rapprochée qu'avant le traitement.

5. Procédé selon la revendication 3 ou 4, **caractérisé**

   - **en ce que** la composante de force (Fr) faisant pression vers l'extérieur dans le sens radial est comprise entre 50 N et 150 N par mm de longueur circonférentielle du secteur de la surface d'assise (7a) du talon s'étendant pratiquement dans le sens axial, secteur dans lequel doit avoir lieu la déformation plastique du talon (2), et
   - la chaleur, au moins dans la zone du talon (2), est comprise entre 100°C et 230°C, de préférence entre 160°C et 180°C,
   - où la durée de l'effet commun de la force et de la chaleur est comprise entre 10 minutes et 45 minutes.

6. Procédé selon les revendications 1 et 2, **caractérisé**

   - **en ce que** la déformation - par zones - du talon (2) se produit sous l'effet localisé d'une composante de force (Fa) comprimant axialement le talon (2) à traiter, sur ses surfaces (7b, 7r) s'étendant pratiquement dans le sens radial, et sous l'effet de la chaleur,
   - où ensuite, à l'emplacement de cet effet, la tringle (3) du pneumatique (1) traité ultérieurement se trouve plus éloignée de la surface d'assise (7a) du talon s'étendant pratiquement dans le sens axial, qu'avant le traitement.

7. Procédé selon les revendications 1 et 2, **caractérisé**

   - **en ce que** la déformation - par zones - du talon (2) se produit sous l'effet d'une composante de force (Fa) comprimant axialement le talon (2) à traiter, sur ses surfaces (7b, 7r) s'étendant pratiquement dans le sens radial, et sous l'effet localisé de la chaleur,

- où ensuite, au niveau de l'emplacement de cet effet, la tringle (3) du pneumatique (1) traité ultérieurement se trouve plus éloignée de la surface d'assise (7a) du talon s'étendant pratiquement dans le sens axial, qu'avant le traitement.

8. Procédé selon la revendication 6 ou 7, **caractérisé**

- **en ce que** la composante de force (Fa) comprimant dans le sens axial est comprise entre 50 N et 150 N par mm de longueur circonférentielle moyenne du secteur de la surface d'assise (7r) du talon s'étendant pratiquement dans le sens radial, secteur dans lequel doit avoir lieu la déformation plastique du talon (2), et
- la chaleur, au moins dans la zone du talon (2), est comprise entre 100°C et 230°C, de préférence entre 160°C et 180°C,
- où la durée de l'effet commun de la force et de la chaleur est comprise entre 10 minutes et 45 minutes.

9. Procédé selon la revendication 3 ou 4, **caractérisé**

- **en ce que** l'on détermine d'abord, de façon en soi connue, l'emplacement ou les emplacements au niveau duquel ou desquels une variable radiale [R] du pneumatique (1) - de préférence sa force radiale - dépasse une valeur de seuil supérieure,
- **en ce que**, ensuite, au moins au niveau de l'emplacement où cette variable radiale [R] du pneumatique (1) dépasse la valeur de seuil supérieure et où elle est la plus importante, de préférence au niveau de tous les emplacements où la variable radiale [R] dépassant une valeur de seuil supérieure est trop importante, la variable radiale [R] du pneumatique (1) est diminuée,
- et est diminuée à cet emplacement, par le fait qu'au niveau de cet emplacement, la tringle (3) est encore plus rapprochée de la surface d'assise (7a) du talon s'étendant pratiquement de façon axiale.

10. Procédé selon la revendication 6 ou 7, **caractérisé**

- **en ce que** l'on détermine d'abord, de façon en soi connue, l'emplacement ou les emplacements au niveau duquel ou desquels une variable radiale [R] du pneumatique (1) - de préférence sa force radiale, mais également, si possible, son rayon de bande de roulement
- dépasse une valeur de seuil inférieure,
- **en ce que**, ensuite, au moins au niveau de l'emplacement où cette variable radiale [R] du pneumatique (1) dépasse la valeur de seuil inférieure et où elle est la plus faible, de préférence au niveau de tous les emplacements où la variable radiale [R] dépassant une valeur de seuil inférieure est trop faible, la variable radiale [R] du pneumatique (1) est augmentée,
- et est augmentée, par le fait qu'au niveau de cet emplacement, la tringle (3) est encore plus éloignée de la surface d'assise (7a) du talon s'étendant pratiquement de façon axiale.

11. Procédé selon la revendication 3 ou 4, **caractérisé**

- **en ce que** l'on détermine d'abord une variable radiale [R] du pneumatique - de préférence sa force radiale - par au moins un tour de roue complet en fonction de l'angle de rotation (phi),
- **en ce que**, ensuite, on calcule, au moyen d'une analyse de Fourier, au moins la première harmonique - de préférence les première, deuxième et troisième - de cette fonction,
- **en ce que**, ensuite, au moins dans la zone du maximum de la première harmonique - de préférence également dans la zone du maximum de la deuxième et dans la zone du maximum de la troisième harmonique -, cette variable radiale [R] du pneumatique (1) est diminuée,
- et est diminuée à cet endroit, par le fait que, à cet endroit, la tringle (3) est plus rapprochée de la surface d'assise (7a) du talon s'étendant pratiquement dans le sens axial.

12. Procédé selon la revendication 6 ou 7, **caractérisé**

- **en ce que** l'on détermine d'abord une variable radiale [R] du pneumatique - de préférence sa force radiale - par au moins un tour de roue complet en fonction de l'angle de rotation (phi),
- **en ce que**, ensuite, on calcule, au moyen d'une analyse de Fourier, au moins la première harmonique - de préférence les première, deuxième et troisième - de cette fonction,
- **en ce que**, ensuite, au moins dans la zone du minimum de la première harmonique - de préférence également dans la zone du minimum de la deuxième et dans la zone du minimum de la troisième harmonique -, cette variable radiale [R] du pneumatique (1) est augmentée,
- et est augmentée à cet endroit, par le fait que, à cet endroit, la tringle (3) est plus éloignée de la surface d'assise (7a) du talon s'étendant pratiquement dans le sens axial.

13. Procédé selon les revendications 9 et 10 ou selon les revendications 11 et 12, **caractérisé en ce que** l'on diminue aussi bien le maximum de la variable radiale [R] ou le maximum de la première harmonique de la variable radiale [R], aussi bien que l'on augmente le minimum de la variable radiale [R] ou le minimum de la première harmonique de la variable radiale [R].

14. Procédé selon l'une quelconque des revendications 9 à 13 et selon la revendication 5 ou 8, où la force radiale [R$_f$] avec sa variation [δR$_f$ ou - son équivalent - RKS] est enregistrée comme variable radiale [R], **caractérisé**

   - **en ce que** l'on calcule d'abord l'orientation et la hauteur de la modification de force radiale appropriée δR, de préférence selon l'une quelconque des revendications 7 à 11,
   - ensuite, en fonction de la température de déformation T prévue, on calcule, d'après la formule suivante, le temps d'effet nécessaire t :

$$t = c\, \frac{\partial R}{(T-T_o)^2}$$

   où c est une constante dépendant de la composition du caoutchouc et T$_o$ la température de transition vitreuse du mélange de caoutchouc utilisé dans la zone du talon où, pour les compositions de caoutchouc qui sont habituelles dans la zone du talon du pneumatique, la constante c varie entre 1,0 et 2,8 x 10$^{-7}$ mm$^2$/K$^2$s, variant entre 1,6 et 1,8 x 10$^{-7}$ mm$^2$/K$^2$s pour la plupart des pneumatiques de voitures de tourisme,

   - et, ensuite, l'on effectue le traitement de compression et le traitement thermique - ainsi conçu - du talon (2) du pneumatique.

15. Procédé selon la revendication 14, caractérisé

   a) en ce que, lors de la confection de toutes les ébauches de pneumatiques d'un lot, les points de jonction nécessaires sont disposés à chaque fois dans une longueur de phase identique, et

   b) en ce que toutes les ébauches de pneumatiques de ce lot, configurées dans une longueur de phase déterminée, sont fournies et vulcanisées dans un moule de vulcanisation identique qui est de préférence le même moule,

   c) en ce que, ensuite, un collectif représentatif de n pneumatiques - où n, de préférence, est égal à 8 - est extrait de ce lot,

   d) et tous les pneumatiques de ce collectif sont refroidis, de préférence à une température inférieure à 75°C,

   e) où ensuite, chaque pneumatique de ce collectif est monté sur une jante de mesure et, pour chaque pneumatique de ce collectif, une variable radiale [R$_\mu$] - de préférence la force radiale - est mesurée par l'angle de rotation (phi), où μ doit aller de 1 à n,

   f) où ensuite, ces profils de fonction - calculés individuellement - de la variable radiale R$\mu$ f$\mu$ (phi) sont calculés, d'après une moyenne, de façon conforme à la phase et de façon linéaire pour obtenir une variable radiale moyenne :

$$R_m = f_m(phi) = 1/n \times [R_1 + R_2 + ... + R_{(n-1)} + R_n],$$

   g) où ensuite, en fonction de la variable radiale moyenne R$_m$(phi) ainsi déterminée, on calcule la déformation plastique du talon - dans le cas préféré, conformément à la revendication 14 - et, ensuite, on effectue la déformation plastique du talon, ainsi déterminée, sur tous les n pneumatiques de ce collectif,

   h) en ce que, ensuite, chaque pneumatique de ce collectif est à nouveau refroidi - de préférence à une température inférieure à 75°C -, monté à nouveau sur une jante de mesure et, pour chaque pneumatique de ce collectif, la variable radiale [R] est à nouveau mesurée par l'angle de rotation (phi) et comparée aux champs de tolérances prédéfinis, et

   i) dans le cas du respect des champs de tolérances prédéfinis, tous les autres pneumatiques de ce lot sont traités de la même manière, en déformant plastiquement le talon (2), par zones.

16. Procédé selon la revendication 15, **caractérisé**

   - **en ce que**, dans le cas du non-respect des champs de tolérances prédéfinis conformément à la caractéristique h) de la revendication 15, on extrait de ce lot un autre collectif représentatif,
   - où ledit autre collectif ne contient aucun pneumatique du premier collectif,
   - où ensuite est traité ledit autre collectif correspondant aux caractéristiques d) à h) de la revendication précédente,
   - où ensuite, dans le cas du respect des champs de tolérances prédéfinis, tous les autres pneumatiques de ce lot sont traités de la même manière, en déformant plastiquement le talon (2), par zones.

17. Procédé selon l'une quelconque des revendications précédentes, **caractérisé en ce qu'**une variable radiale R(phi) - de préférence la force radiale - est mesurée sur deux chemins de roulement Rr(phi) et R1 (phi), à savoir un à droite et un à gauche du milieu du pneumatique, et dans le cas d'écarts entre Rr et R1, les deux talons (2) du pneumatique (1) sont déformés plastiquement, de façon différente l'un par rapport à l'autre - de préférence en même temps -, où la zone ou les zones de la longueur d'arc de conduite, dans laquelle ou dans lesquelles l'un des talons est déformé plastiquement, peut ou peuvent s'écarter de la zone ou des zones de longueur d'arc dans laquelle ou dans lesquelles l'autre talon est déformé plastiquement.

18. Procédé selon au moins la revendication 3 ou 4 ou 6 ou 7 et, en outre, de préférence, selon la revendication 15, **caractérisé en ce que** - dans le cas de la revendication 15, indépendamment des pneumatiques du collectif ou des collectifs représentatif(s) -, concernant les pneumatiques d'un lot

   - grâce à un intervalle dans le temps suffisamment court, entre le moment où l'ébauche est extraite du moule de vulcanisation et le moment où la déformation plastique du talon est réalisée - au moins par zones - et/ou
   - grâce à des moyens thermo-isolants, entourant au moins les talons des pneumatiques,
   - le refroidissement des pneumatiques est freiné suivant une importance telle, que les pneumatiques, au moment du montage sur le dispositif provoquant la déformation du talon, sans apport d'énergie thermique dans le talon du pneumatique, présentent encore, au moins dans la zone du talon, une température comprise entre 100°C et 230°C, de préférence entre 160°C et 180°C.

19. Procédé selon la revendication 18 et selon au moins la revendication 4 ou 7, **caractérisé en ce que** la localisation de l'effet de la chaleur est obtenue, par le fait qu'avant l'application de la force déformante, les zones du talon (2), qui doivent rester pratiquement non déformées, sont refroidies, de préférence à une température inférieure à 75°C.

20. Procédé selon les revendications 1 et 2, **caractérisé en ce que** la répartition de matière, dans la zone de la tringle, est rendue homogène, à chaque fois à une température du talon comprise entre 100°C et 230°C, par un élargissement uniforme du talon du pneumatique, par exemple par compression sur une jante de calibrage conique ou bien par un écrasement axial uniforme.

21. Dispositif utilisé pour la réalisation d'un procédé conformément à la revendication 20, comprenant un élargissement radial uniforme du talon, lequel dispositif comprend un tambour qui n'est pas divisé en segments mécaniquement mobiles l'un par rapport à l'autre, **caractérisé en ce que** le tambour est conique, comprenant de préférence un angle (β) formé entre la surface d'enveloppe du tambour et l'axe de symétrie de rotation correspondant à peu près à l'inclinaison de la surface d'assise intérieure - dans le sens radial - du talon du pneumatique à traiter, et - par zones ou en totalité - peut être chauffé ou refroidi ou bien est thermo-isolant, où le dispositif présente en outre un élément - de préférence de forme annulaire - qui peut engager par pression, axialement, le talon d'un pneumatique.

22. Dispositif utilisé pour la réalisation d'un procédé conformément à la revendication 3 ou 4, comprenant un élargissement radial - non uniforme - du talon, où le dispositif comprend un tambour qui n'est pas divisé en segments mécaniquement mobiles l'un par rapport à l'autre, **caractérisé**

   - **en ce que** le tambour est conique - ayant de préférence un angle moyen formé entre la surface d'enveloppe du tambour et l'axe de symétrie de rotation correspondant à peu près à l'inclinaison de la surface d'assise intérieure - dans le sens radial - du pneumatique à traiter,
   - où le tambour, en section, est ovalisé et présente par conséquent un rayon R variant suivant l'angle de rotation phi, lequel rayon correspond à la formule :

$$R = R_m + c \sin(n \times phi)$$

où n est l'ordre des harmoniques à combattre,

   - où le dispositif présente en outre un élément, de préférence de forme annulaire, qui peut engager par pression, axialement, le talon (2) d'un pneumatique,
   - où le tambour, de préférence - par zones ou en totalité -, peut être chauffé ou refroidi ou bien est thermo-isolant.

23. Dispositif utilisé pour la réalisation d'un procédé conformément à la revendication 20, servant à la compression axiale uniforme du talon, lequel dispositif comprend au moins deux coques (14, 15, 16), de forme annulaire, qui ne sont pas divisées en segments mécaniquement mobiles l'un par rapport à l'autre, **caractérisé en ce que** les deux coques (14 et 15 ; 15 et 16) sont guidées de façon coaxiale et concentrique l'une par rapport à l'autre et présentent des surfaces (17 et 18) tournées l'une vers l'autre qui, comme un négatif, s'adaptent au contour extérieur axial et au contour intérieur axial du talon du pneumatique à traiter et, de préférence - par zones ou en totalité -, peuvent être chauffées ou refroidies ou bien sont thermo-isolantes, où au moins l'une (14, 16) des deux coques (14, 15, 16) traitant un talon (2) est mobile axialement par rapport à l'embase du dispositif.

24. Dispositif utilisé pour la réalisation d'un procédé conformément à la revendication 6 ou 7, comportant une compression axiale non uniforme du talon, où le dispositif comprend au moins deux coques (14, 15, 16) qui ne sont pas divisées en segments mécaniquement mobiles l'un par rapport à l'autre, **caractérisé en ce que** les deux coques (14 et 15 ; 15 et 16) présentent des surfaces (17 et 18) tournées l'une vers l'autre, qui, comme un négatif, s'adaptent au contour intérieur axial et au contour extérieur axial du pneumatique à traiter, où les deux coques (14 et 15 ou 15 et 16) - par zones ou en totalité - peuvent être chauffées ou refroidies ou bien peuvent être thermo-isolantes, où au moins l'une (14, 16) des deux coques (14, 15, 16) traitant un talon (2) est mobile axialement par rapport à l'embase du dispositif, où les deux coques (14 et 15 ou 15 et 16) sont en fait guidées de façon concentrique l'une par rapport à l'autre, mais peuvent être désaxées l'une par rapport à l'autre de manière telle, que l'espacement axial formé entre les deux coques varie sur la circonférence, en ayant un emplacement circonférentiel d'espacement (amin) le plus petit et un emplacement circonférentiel opposé d'espacement le plus grand (amax).

25. Tambour (10) qui est divisé en au moins 2, de préférence 12 segments (11), dont au moins un - de préférence tous - est et/ou sont mobile(s) radialement, est conçu comme un dispositif utilisé pour la réalisation d'un procédé conformément aux revendications 3 et/ou 4,
**caractérisé en ce que** plusieurs mécanismes d'écartement, provoquant le mouvement radial du ou des segment(s) (11), sont présents, lesquels mécanismes d'écartement sont conçus de façon si robuste, qu'ils peuvent absorber, sans dommage, au moins une force radiale égale au produit de 50 N/mm fois la longueur circonférentielle du segment concerné.

26. Tambour (10) selon la revendication 25, **caractérisé en ce qu'**au moins l'un de ses segments (11) - de préférence tous - peut ou peuvent être chauffé(s) de manière telle, que sa surface ou leurs surfaces de segments (12), qui est ou sont prévue(s) pour le contact et pour la compression plastiquement déformante sur la surface d'assise (7a) du talon s'étendant pratiquement dans le sens axial, peut ou peuvent atteindre une température comprise entre 100°C et 230°C, de préférence entre 160°C et 180°C.

27. Tambour (10) selon la revendication 25, **caractérisé en ce qu'**au moins l'un de ses segments (11) - de préférence tous - peut ou peuvent être refroidi(s) de manière telle, que sa surface ou leurs surfaces de segments (12), qui est ou sont prévue(s) pour le contact et pour la compression plastiquement déformante sur la surface d'assise (7a) du talon s'étendant pratiquement dans le sens axial, peut ou peuvent atteindre une température inférieure à 100°C, de préférence inférieure à 75°C.

28. Tambour (10) selon au moins l'une quelconque des revendications 25 à 27, **caractérisé en ce que** les segments (11) peuvent être sortis de façon importante et variable, dans le sens radial.

29. Dispositif utilisé pour la réalisation d'un procédé conformément à la revendication 6 ou 7, **caractérisé en ce que** le dispositif présente deux anneaux servant à saisir le talon (2) d'un pneumatique, anneaux dont au moins un est divisé en au moins deux segments - de préférence douze - dont au moins un peut se déplacer de façon axiale.

30. Dispositif selon la revendication 29, **caractérisé en ce que** les segments - se faisant face dans le sens axial - des deux anneaux peuvent se déplacer axialement l'un par rapport à l'autre.

31. Dispositif selon la revendication 29 ou 30, **caractérisé en ce qu'**au moins l'un de ses segments - de préférence tous - peut ou peuvent être chauffé(s) de manière telle, que sa surface ou leurs surfaces de segments, qui est ou sont prévue (s) pour le contact et pour la compression plastiquement déformante sur les surfaces (7b, 7r) d'un talon (2) s'étendant pratiquement dans le sens radial, peut ou peuvent présenter une température comprise entre 100°C et 230°C, de préférence entre 160°C et 180°C.

32. Dispositif selon au moins l'une quelconque des revendications 29 à 31, **caractérisé en ce qu'**au moins l'un de ses segments - de préférence tous - peut ou peuvent être refroidi(s) de manière telle, que sa surface ou leurs surfaces de segments, qui est ou sont prévue(s) pour le contact et pour la compression plastiquement déformante sur les surfaces (7b, 7r) d'un talon (2) s'étendant pratiquement dans le sens radial, peut ou peuvent présenter une température inférieure à 100°C, de préférence inférieure à 75°C.

33. Tambour selon l'une quelconque des revendications 25 à 28, ou dispositif selon au moins l'une quelconque des revendications 29 à 32, **caractérisé en ce que** chacun de ses segments peut être réglé à des températures différentes, par un refroidissement et/ou par un chauffage indépendants l'un de l'autre.

**34.** Tambour selon l'une quelconque des revendications 25 à 28 et/ou dispositif selon l'une quelconque des revendications 29 à 33, **caractérisé en ce que** les segments (11, 12) mobiles l'un par rapport à l'autre sont aplatis au niveau de leurs points de jonction (11.1, 12.1).

**35.** Procédé selon l'une quelconque des revendications 1 à 20, **caractérisé en ce que** le talon (2), au cours du traitement ultérieur par déformation plastique, est placé dans un état de vibration, au moins par zones, de préférence dans la plage des ultrasons.

**36.** Dispositif selon l'une quelconque des revendications 21 à 34, utilisé pour la réalisation d'un procédé selon la revendication 35, **caractérisé en ce qu'**au moins l'une des pièces de structure du dispositif, venant au contact du talon (2) au cours de la déformation plastique, peut vibrer ou bien peut faire vibrer le caoutchouc du talon, au moyen d'une application de force sur la tringle, à chaque fois, de préférence, dans la plage des ultrasons.

# FIG. 1

RKS
Maximum

FIG. 2

FIG. 3

160° C

13

11.1

12.1

20° C

11

11.1

12.1

12

EP 1 105 706 B1

FIG. 4

RKS
Maximum

1

10

11

$F_R$

$F_R$

12

7a

FIG.5

EP 1 105 706 B1

[da N]

-90°  0°  40°  90°  180°  270°  360°

9

35

FIG. 6

FIG. 7

# FIG. 8